# FASCICULE DE BREVET EUROPEEN

(11) **EP 1 560 090 B1**
(45) Date de publication et mention de la délivrance du brevet: **17.09.2008**
(21) Numéro de dépôt: 04100348.4
(22) Date de dépôt: 30.01.2004
(51) Int. Cl.: G05B 19/4065

(54) **Procédé de détection de l'état d'un outil d'usinage**
Verfahren zur Erkennung des Zustandes eines Bearbeitungswerkzeuges
Method for monitoring the condition of a machining tool

(43) Date de publication de la demande: 03.08.2005
(73) Titulaire: Tornos SA, 2740 Moutier (CH)
(72) Inventeur: Paroz, Cedric, 2732 Saicourt (CH)
(74) Mandataire: BOVARD AG

(56) Documents cités:
- US-A- 4 251 872
- US-A- 4 536 849
- US-A- 5 895 177

## Description

L'invention se rapporte à un procédé de détection de l'état d'un outil d'usinage monté sur une machine-outil qui met en oeuvre au moins un tel outil d'usinage.

Précisément, l'invention s'applique à la détection de l'état de tout outil d'usinage utilisé lors d'un processus d'usinage comprenant plusieurs phases opératoires, pour réaliser au moins une opération d'usinage sur une pièce, dite pièce à usiner.

L'invention se rapporte également aux moyens techniques pour la mise en oeuvre du procédé.

L'invention concerne également les machines-outils qui comprennent les moyens fonctionnels pour mettre en oeuvre le procédé.

L'invention concerne encore le logiciel pour la mise en oeuvre du procédé ainsi que le support magnétique ou optique sur lequel est enregistré ledit logiciel.

L'invention s'applique avantageusement, mais non exclusivement, à la détection de l'état d'outils sur des machines-outils, telles des machines de tournage, pour la production de pièces en série.

Par l'expression "état de l'outil d'usinage" on désigne son aptitude à réaliser ou non l'opération d'usinage pour laquelle il est conçu.

On considèrera qu'un outil d'usinage est inapte à réaliser l'opération d'usinage pour laquelle il est conçu, lorsqu'une partie active qu'il comporte, telle une partie coupante, présente un défaut qui va affecter l'usinage, voire entraver sa réalisation.

Ce défaut peut être localisé au niveau d'une arête coupante que comprend la partie active et, par exemple, consister en une usure, voire une rupture locale de cette arête coupante.

Le défaut peut également être plus conséquent et notamment consister en une rupture de la partie active de l'outil d'usinage, voire une rupture du corps de l'outil d'usinage.

Plus après, on considèrera que l'outil d'usinage est "hors d'usage", lorsqu'il est inapte à assurer l'opération d'usinage pour laquelle il est conçu, quelle que soit la localisation du défaut.

Les différents phénomènes qui peuvent affecter un outil d'usinage au point qu'il doit être considéré comme hors d'usage, ne seront pas énoncés de manière exhaustive, ni détaillés ci-après.

A titre d'exemple, parmi les phénomènes précités, on peut considérer une collision accidentelle avec la partie active d'un outil ou la fatigue du corps de l'outil.

Parmi les procédés de détection de l'état d'un outil d'usinage qui sont connus de la demanderesse, certains sont basés sur la mesure, notamment, de forces extérieures qui sont reçues par l'outil d'usinage, lors de l'usinage (US-A-4 251 872).

Ces procédés ont leurs avantages, mais ils impliquent la mise en oeuvre de moyens de haute technologie, dont le prix de revient limite leur usage à des cas particuliers.

D'autres procédés, moins onéreux, sont limités à la seule détection de présence d'outils et sont réservés à des outils de grande taille, c'est-à-dire, par exemple, à des outils de perçage de plus de cinq dixièmes de millimètres de diamètre.

De plus, tous les procédés de détection connus impliquent la réalisation de réglages d'adaptation à chaque utilisation, lesquels réglages sont, en outre, longs fastidieux, et sources d'erreurs d'interprétation des résultats.

La majorité de ces procédés impliquent également des pertes de productivité.

Un résultat que l'invention vise à obtenir est un procédé de détection du type précité qui est fiable, insensible aux perturbations extérieures qui n'exige que peu de réglages et ne causant pas de perte de productivité.

Un autre résultat que l'invention vise à obtenir est un procédé qui permet l'utilisation de moyens techniques simples et de faibles coûts.

A cet effet, l'invention a pour objet un procédé de détection de l'état d'un outil d'usinage utilisé sur une machine-outil qui met en oeuvre au moins un tel outil d'usinage pour, lors d'un processus d'usinage comprenant plusieurs phases opératoires, réaliser au moins une opération d'usinage sur une pièce, dite pièce à usiner,
lesdites phases opératoires consistant en au moins l'une des phases que sont :
. une première phase opératoire, telle une phase d'approche rapide, au cours de laquelle l'outil d'usinage n'est pas en contact avec la pièce à usiner et ne reçoit aucune action de ladite pièce à usiner,
. une deuxième phase opératoire, telle une phase d'approche lente, au cours de laquelle l'outil d'usinage entre en contact avec la pièce à usiner et reçoit une action dont l'amplitude croît d'une valeur minimale à une valeur maximale, dite première valeur prédéterminée,
. une troisième phase opératoire, telle une phase d'usinage, au cours de laquelle l'outil d'usinage procède à une opération d'usinage de la pièce à usiner et reçoit une action dont l'amplitude moyenne reste sensiblement constante,
. une quatrième phase opératoire, telle une phase de fin d'usinage, au cours de laquelle l'outil d'usinage achève une opération d'usinage de la pièce à usiner et reçoit une action dont l'amplitude décroît d'une valeur maximale, dite première valeur prédéterminée, à une valeur minimale,
ce procédé étant caractérisé en ce que, pour détecter l'état de l'outil d'usinage, on surveille au niveau de cet outil d'usinage les variations d'amplitude d'une force extérieure qui est appliquée à cet outil d'usinage, et on recherche l'apparition d'une variation d'amplitude de valeur au moins égale à la première valeur prédéterminée, et
a) si une telle variation d'amplitude de valeur au moins égale à la première valeur prédéterminée est détectée, on vérifie si, en fonction de la phase opératoire du processus d'usinage dans laquelle l'outil d'usinage se trouve, il est possible qu'une telle variation d'amplitude de valeur au moins égale à la première valeur prédéterminée d'amplitude d'une force extérieure appliquée à l'outil d'usinage puisse se produire, et
   - en cas de réponse positive, on conclut que l'outil d'usinage est en état de fonctionnement,
   - en cas de réponse négative, on conclut que l'outil d'usinage est hors d'usage,
b) si une telle variation d'amplitude de valeur au moins égale à la première valeur prédéterminée n'est pas détectée, on vérifie si, en fonction de la phase opératoire du processus d'usinage dans laquelle l'outil d'usinage se trouve, il est possible qu'une telle variation d'amplitude de valeur au moins égale à la première valeur prédéterminée d'amplitude d'une force extérieure appliquée à l'outil d'usinage ne se produise pas, et
   - en cas de réponse positive, on conclut que l'outil d'usinage est en état de fonctionnement,
   - en cas de réponse négative, on conclut que l'outil d'usinage est hors d'usage.

L'invention a également pour objet les moyens pour la mise en oeuvre du procédé de détection précité.

L'invention a également pour objet les moyens techniques pour la mise en oeuvre du procédé, les machines-outils qui comprennent lesdits moyens fonctionnels pour mettre en oeuvre le procédé, le logiciel pour la mise en oeuvre du procédé ainsi que le support magnétique ou optique sur lequel est enregistré ledit logiciel.

L'invention sera bien comprise à la lecture de la description ci-après faite à titre d'exemple non limitatif en regard du dessin ci-annexé qui représente schématiquement :

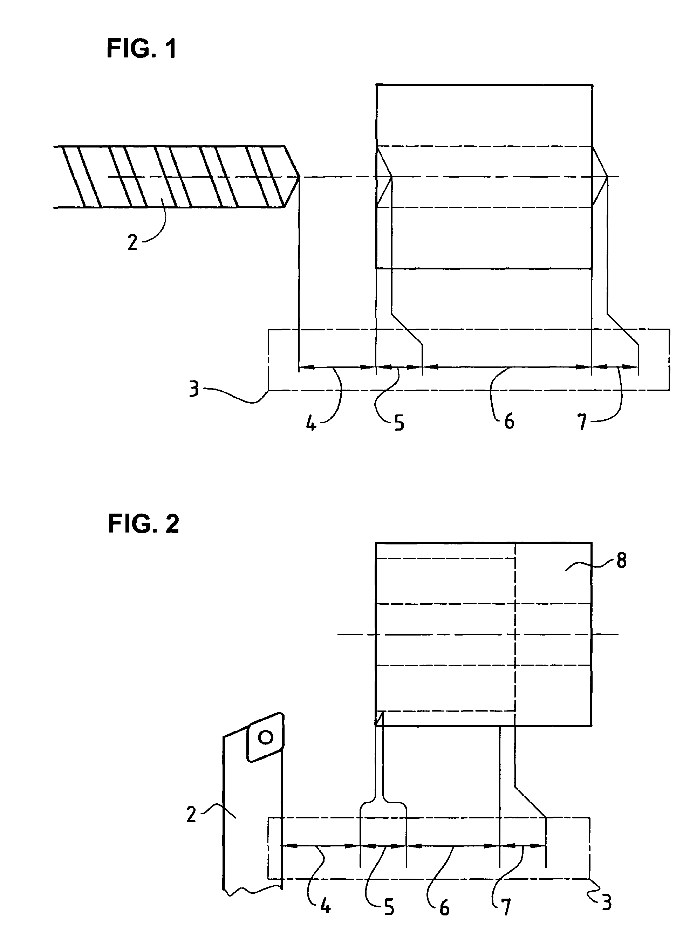

- figures 1 et 2, en vue de dessus, une pièce à usiner et un outil d'usinage destiné à usiner cette pièce, ainsi que des tracés représentant différentes phases opératoires du processus d'usinage,
- figure 3, une vue de face d'une machine-outil qui met en oeuvre au moins un outil d'usinage pour, lors d'un processus d'usinage comprenant plusieurs phases opératoires, réaliser au moins une opération d'usinage sur une pièce à usiner,

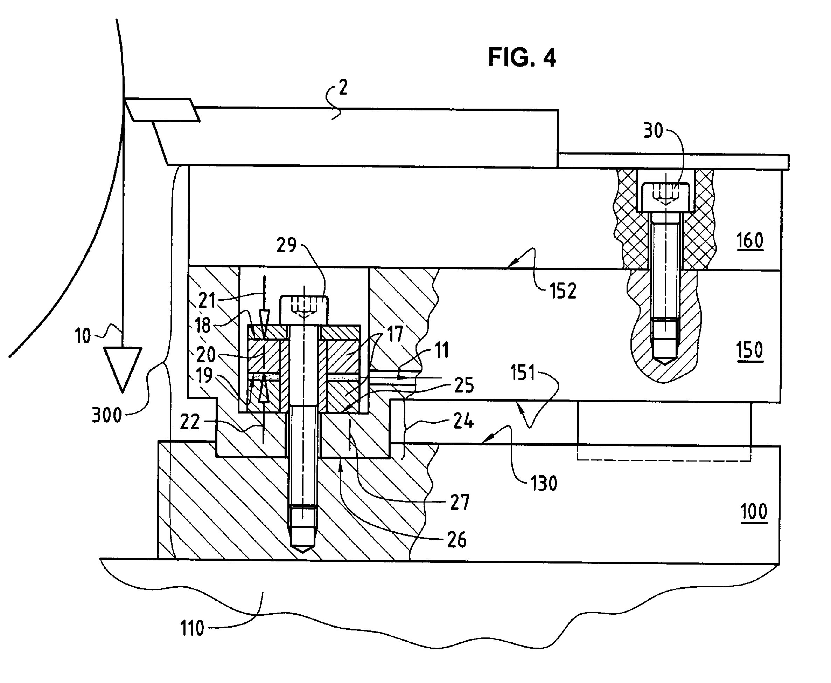

- figure 4, vu partiellement en coupe longitudinale, un porte-outil équipé selon le procédé de l'invention,
- figure 5, un graphique présentant l'évolution, en fonction du temps (t), de l'amplitude (A) d'une caractéristique, telle la tension, d'un signal électrique exploité dans le procédé de l'invention,
- figure 6, un graphique représentant, pour un premier nombre prédéterminé (N1) d'usinages successifs identiques, les valeurs maximales (VM) successives d'amplitude (A) d'une force extérieure (10) appliquée à l'outil d'usinage (2),
- figure 7, un graphique représentant, pour un deuxième nombre prédéterminé (N2) d'usinage successifs identiques, la durée (D) du trajet effectué par l'outil d'usinage (2), à une vitesse de déplacement déterminée, entre, un premier point déterminé et un deuxième point déterminé de la trajectoire de cet outil d'usinage (2).
   En se reportant au dessin, on voit une machine-outil 1 qui met en oeuvre au moins un outil d'usinage 2 pour, lors d'un processus d'usinage 3 comprenant plusieurs phases opératoires 4, 5, 6, 7, réaliser au moins une opération d'usinage sur une pièce, dite pièce à usiner 8.
   En figure 1, on voit une pièce à usiner 8 consistant en une pièce cylindrique de révolution qui doit subir un perçage axial.
   En figure 2, on voit la pièce à usiner 8 de la figure 1 qui doit subir un usinage périphérique (chariotage) sur une fraction de la dimension longitudinale de sa face cylindrique.
   Sur chacune de ces deux figures, la forme de la pièce après la réalisation de l'usinage, est dessiné en trait pointillé fin.
   Les phases opératoires 4 à 7 consistent en au moins l'une des phases que sont :
   . une première phase opératoire 4, telle une phase d'approche rapide, au cours de laquelle l'outil d'usinage 2 n'est pas en contact avec la pièce à usiner 8 et ne reçoit aucune action de ladite pièce à usiner 8,
   . une deuxième phase opératoire 5, telle une phase d'approche lente, au cours de laquelle l'outil d'usinage 2 entre en contact avec la pièce à usiner 8 et reçoit une action dont l'amplitude A croît d'une valeur minimale à une valeur maximale, dite première valeur 90 prédéterminée,
   . une troisième phase opératoire 6, telle une phase d'usinage, au cours de laquelle l'outil d'usinage 2 procède à une opération d'usinage de la pièce à usiner 8 et reçoit une action dont l'amplitude moyenne reste sensiblement constante,
   . une quatrième phase opératoire 7, telle une phase de fin d'usinage, au cours de laquelle l'outil d'usinage 2 achève une opération d'usinage de la pièce à usiner 8 et reçoit une action dont l'amplitude A décroît d'une valeur maximale, dite première valeur 90 prédéterminée, à une valeur minimale (par exemple nulle).

Lors de chacune de ces phases opératoires, l'outil d'usinage est considéré comme étant "hors d'usage" pour l'une des différentes raisons dans le texte introductif.

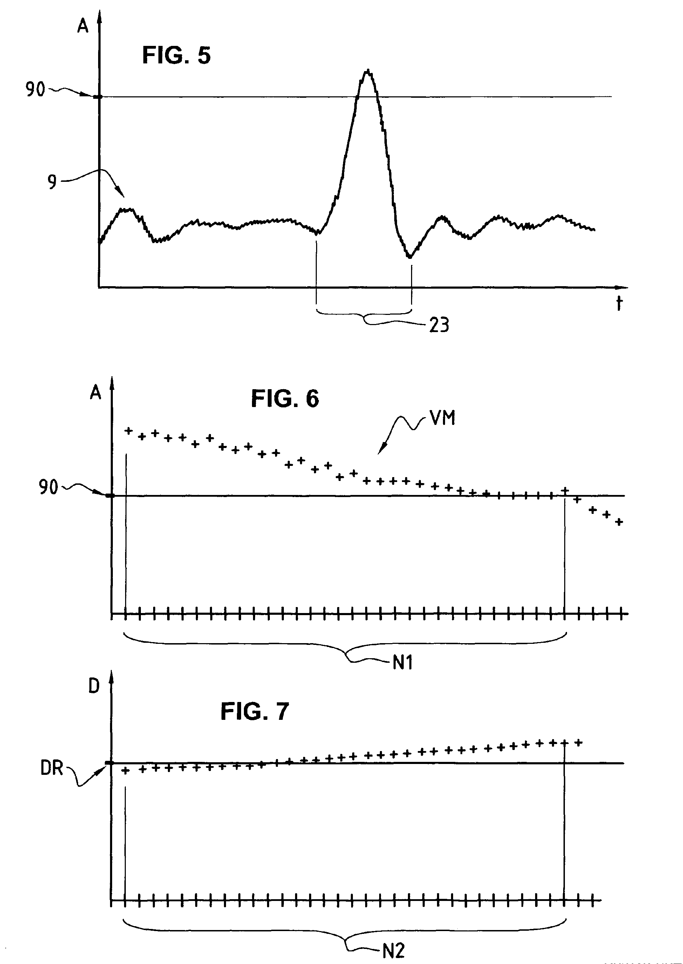

De manière remarquable (figure 5), pour détecter l'état de l'outil d'usinage 2, on surveille au niveau de cet outil d'usinage 2 les variations 9 d'amplitude A d'une force extérieure 10 qui est appliquée à cet outil d'usinage 2, et on recherche l'apparition d'une variation d'amplitude A de valeur au moins égale à la première valeur 90 prédéterminée, et
a) si une telle variation d'amplitude A de valeur au moins égale à la première valeur 90 prédéterminée est détectée, on vérifie si, en fonction de la phase opératoire du processus d'usinage dans laquelle l'outil d'usinage 2 se trouve, il est possible qu'une telle variation d'amplitude A de valeur au moins égale à la première valeur 90 prédéterminée d'amplitude A d'une force extérieure 10 appliquée à l'outil d'usinage 2 puisse se produire, et
   - en cas de réponse positive (c'est-à-dire qu'il est possible que la variation recherchée puisse se produire), on conclut que l'outil d'usinage 2 est en état de fonctionnement,
   - en cas de réponse négative (c'est-à-dire qu'il est impossible que la variation recherchée puisse se produire), on conclut que l'outil d'usinage 2 est hors d'usage,
b) si une telle variation d'amplitude A de valeur au moins égale à la première valeur 90 prédéterminée n'est pas détectée, on vérifie si, en fonction de la phase opératoire du processus d'usinage dans laquelle l'outil d'usinage 2 se trouve, il est possible qu'une telle variation d'amplitude A de valeur au moins égale à la première valeur 90 prédéterminée d'amplitude A d'une force extérieure 10 appliquée à l'outil d'usinage 2 ne se produ ise pas, et
   - en cas de réponse positive (c'est-à-dire qu'il est possible que la variation recherchée ne se produise pas), on conclut que l'outil d'usinage 2 est en état de fonctionnement,
   - en cas de réponse négative (c'est-à-dire qu'il est impossible que la variation recherchée ne se produise pas), on conclut que l'outil d'usinage 2 est hors d'usage.

L'homme du métier est à même de définir, par le calcul et/ou par essais, pour chaque type d'outil d'usinage ce qu'il y a lieu de considérer comme première valeur 90 prédéterminée d'amplitude A d'une force extérieure 10 appliquée à l'outil d'usinage 2.

Le procédé de l'invention, consiste à rechercher une variation prédéterminée d'amplitude A de la force extérieure 10 et ne consiste donc pas à mesurer une valeur de ladite force extérieure 10.

La force extérieure 10 appliquée à l'outil d'usinage 2 est couramment une force qui résulte de l'usinage et est appliquée par la pièce à usiner 8 à l'outil d'usinage 2.

La force extérieure 10 appliquée à l'outil d'usinage 2 peut également être une force qui résulte d'un contact accidentel avec la pièce à usiner 2, mais il peut s'agir d'un contact avec un autre corps que la pièce à usiner 2, par exemple, d'un contact accidentel avec un autre outil d'usinage utilisé sur la machine-outil 1.

Une manière de prédéterminer la première valeur 90 d'amplitude A de la force extérieure 10 appliquée à l'outil d'usinage 2 consiste à, au cours d'une étape préparatoire, mémoriser la valeur maximale de la variation d'amplitude A de cette force extérieure 10, lors d'au moins l'une des phases que sont :
- la deuxième phase opératoire 5, au cours de laquelle l'outil d'usinage 2 entre en contact avec la pièce à usiner 8 et reçoit une action dont l'amplitude A croît d'une valeur minimale à une valeur maximale, dite première valeur 90 prédéterminée, et
- la quatrième phase opératoire 7, au cours de laquelle l'outil d'usinage 2 achève une opération d'usinage de la pièce à usiner 8 et reçoit une action dont l'amplitude A décroît d'une valeur maximale, dite première valeur 90 prédéterminée, à une valeur minimale.

Le procédé selon l'invention est particulièrement destiné à être utilisé sur une machine-outil 1 qui comprend une pluralité de moyens d'entraînement à fonctionnement incrémental, ces moyens d'entraînement actionnant plusieurs organes mobiles de manière à réaliser une opération d'usinage sur une ébauche de pièce à usiner fixée à un porte-pièce de cette machine-outil, ladite machine-outil fonctionnant avec un programme de commande qui utilise des données numériques mémorisées dans une table des pas pour attribuer à chaque moyen d'entraînement une série d'ordres de déplacement incrémentaux se succédant en fonction d'une variable dépendant du temps, la séquence des ordres étant incluse dans la table des pas, ladite table des pas,
. étant établie à partir des résultats d'un calcul définissant la trajectoire d'usinage optimale en fonction du temps, et
. permettant d'obtenir un profil donné avec un matériau donné en tenant compte des caractéristiques de la machine-outil.

Selon l'invention, les moyens techniques spécifiques pour la mise en oeuvre du procédé précité consistent plus particulièrement en :
- un deuxième ensemble fonctionnel 300 permettant, pendant que le processus d'usinage 3 est en cours, de détecter au moins la variation d'amplitude A de valeur au moins égale à la première valeur 90 prédéterminée d'amplitude A d'une force extérieure 10 qui est appliquée à l'outil d'usinage 2,
- un troisième ensemble fonctionnel 400 permettant,
   a) si une telle variation d'amplitude A de valeur au moins égale à la première valeur 90 prédéterminée est détectée, de vérifier si, en fonction de la phase opératoire du processus d'usinage dans laquelle l'outil d'usinage 2 se trouve, il est possible qu'une telle variation d'amplitude A de valeur au moins égale à la première valeur 90 prédéterminée d'amplitude A d'une force extérieure 10 appliquée à l'outil d'usinage 2 puisse se produire, et
      - en cas de réponse positive, de conclure que l'outil d'usinage 2 est en état de fonctionnement,
      - en cas de réponse négative, de conclure que l'outil d'usinage 2 est hors d'usage,
   b) si une telle variation d'amplitude A de valeur au moins égale à la première valeur 90 prédéterminée n'est pas détectée, de vérifier si, en fonction de la phase opératoire du processus d'usinage dans laquelle l'outil d'usinage 2 se trouve, il est possible qu'une telle variation d'amplitude A de valeur au moins égale à la première valeur 90 prédéterminée d'amplitude A d'une force extérieure 10 appliquée à l'outil d'usinage 2 ne se produise pas, et
      - en cas de réponse positive, de conclure que l'outil d'usinage 2 est en état de fonctionnement,
      - en cas de réponse négative, de conclure que l'outil d'usinage 2 est hors d'usage.

Dans les phrases "un deuxième ensemble fonctionnel 300 permettant..." et "un troisième ensemble fonctionnel 400 permettant...", le terme "permettant" doit être considéré comme signifiant que l'ensemble fonctionnel considéré comprend des éléments techniques qui permettent de réaliser les fonctions annoncées.

De manière notable, le troisième ensemble fonctionnel 400 comprend des éléments fonctionnels en vue de prédéterminer la première valeur 90 d'amplitude A de la force extérieure 10 appliquée à l'outil d'usinage 2, et ce, au cours d'au moins une étape préparatoire, ces éléments fonctionnels permettant de mémoriser la valeur maximale de la variation d'amplitude A de cette force extérieure 10, lors d'au moins l'une des phases que sont :
- la deuxième phase opératoire 5, au cours de laquelle l'outil d'usinage 2 entre en contact avec la pièce à usiner 8 et reçoit une action dont l'amplitude A croît d'une valeur minimale à une valeur maximale, dite première valeur 90 prédéterminée, et
- la quatrième phase opératoire 7, au cours de laquelle l'outil d'usinage 2 achève une opération d'usinage de la pièce à usiner 8 et reçoit une action dont l'amplitude A décroît d'une valeur maximale, dite première valeur 90 prédéterminée, à une valeur minimale.

Le procédé selon l'invention comprend également des étapes qui consistent :
- à se munir d'au moins un organe, dit organe de détection 17, permettant
   . d'une part, de recueillir au moins une variation d'amplitude A de valeur au moins égale à la première valeur 90 prédéterminée d'amplitude A d'une force extérieure 10 appliquée à l'outil d'usinage 2, et
   . d'autre part, de générer un signal électrique 11 révélant la présence de cette variation d'amplitude A de valeur au moins égale à la première valeur 90 prédéterminée,
- à interposer cet organe de détection 17 entre la machine-outil 1 et l'outil d'usinage 2 de manière telle qu'il soit soumis au moins aux variations d'amplitude A d'une force extérieure 10 appliquée à l'outil d'usinage 2.

L'expression "à interposer cet organe de détection 17 entre la machine-outil 1 et l'outil d'usinage 2" signifie que l'organe de détection 17 est situé entre l'outil d'usinage 2 et une partie de la machine-outil 1 qui supporte cet outil d'usinage 2, cette partie étant dite partie réceptrice 100.

Il ne faut donc pas considérer l'expression précitée "entre" au sens strict.

Plus après dans la description, se trouvent présentées plusieurs solutions techniques pour interposer l'organe de détection 17 de la manière ci-dessus indiquée.

On verra que la partie réceptrice 100 de la machine-outil 1 consiste, notamment, en une platine portée par un chariot 110 de guidage et de déplacement en translation.

Le deuxième ensemble fonctionnel 300 comprend au moins un organe, dit organe de détection 17, permettant :
. d'une part, de recueillir au moins une variation d'amplitude A de valeur au moins égale à la première valeur 90 prédéterminée d'amplitude A d'une force extérieure 10 appliquée à l'outil d'usinage 2, et
. d'autre part, de générer un signal électrique 11 révélant la présence de cette variation d'amplitude A de valeur au moins égale à la première valeur 90 prédéterminée.

Lorsque l'outil d'usinage 2 est utilisé pour réaliser des usinages successifs identiques, (figure 6) au cours d'un premier nombre prédéterminé N1 de ces usinages identiques successifs, on mémorise les valeurs maximales VM successives de variation d'amplitude A d'une force extérieure 10 appliquée à l'outil d'usinage 2 et,
- on effectue une moyenne pondérée de ces valeurs maximales VM successives,
- on détermine si cette moyenne pondérée a une tendance d'évolution remarquable par une pente, et en cas de réponse positive, on détermine si la pente de l'évolution de la moyenne excède une valeur de seuil prédéterminée, auquel cas, on conclut que l'outil d'usinage 2 est usé.

L'homme du métier est à même de fixer la valeur de seuil au delà duquel la pente de l'évolution de la moyenne engendre la conclusion que l'outil d'usinage 2 est usé.

De manière notable, le troisième ensemble fonctionnel 400 comprend des éléments fonctionnels qui, lorsque l'outil d'usinage 2 est utilisé pour réaliser des usinages successifs identiques, permettent, au cours d'un premier nombre prédéterminé N1 de ces usinages identiques successifs :
- de mémoriser les valeurs maximales VM successives de variation d'amplitude A d'une force extérieure 10 appliquée à l'outil d'usinage 2
- d'effectuer une moyenne pondérée de ces valeurs maximales VM successives,
- de déterminer si cette moyenne pondérée a une tendance d'évolution remarquable par une pente, et en cas de réponse positive, de déterminer si la pente de l'évolution de la moyenne excède une valeur de seuil prédéterminée, auquel cas, de conclure que l'outil d'usinage 2 est usé.

Lorsque l'outil d'usinage 2 est utilisé pour réaliser des usinages successifs identiques, au cours d'un deuxième nombre prédéterminé N2 de ces usinages successifs identiques :
- on mesure la durée D du trajet effectué par l'outil d'usinage 2, à une vitesse de déplacement déterminée, entre,
   . un premier point déterminé de la trajectoire de l'outil d'usinage 2 pendant la première phase opératoire 4, et
   . un deuxième point de la trajectoire de cet outil d'usinage 2 pendant la deuxième phase opératoire 2, ce deuxième point étant atteint lorsqu'on détecte que l'outil d'usinage 2 entre en contact avec la pièce à usiner 8 et,
- on mémorise les différentes durées mesurées et on compare ces durées à au moins une valeur prédéterminée de référence DR pour, en fonction de la vitesse de déplacement de l'outil d'usinage 2 entre le premier point et le deuxième point, déterminer une valeur de dérive thermique du deuxième point relativement au premier point,
- on exploite la valeur déterminée de la dérive thermique pour corriger le positionnement de l'outil d'usinage 2 par rapport à la pièce à usiner 8.

De manière notable, le troisième ensemble fonctionnel 400 comprend des éléments fonctionnels qui, lorsque l'outil d'usinage 2 est utilisé pour réaliser des usinages successifs identiques, permettent, au cours d'un deuxième nombre prédéterminé N2 de ces usinages successifs identiques :
- de mesurer la durée du trajet effectué par l'outil d'usinage 2, à une vitesse déterminée, entre,
   . un premier point déterminé de la trajectoire de l'outil d'usinage 2 pendant la première phase opératoire 4, et
   . un deuxième point de la trajectoire de cet outil d'usinage 2 pendant la deuxième phase opératoire 2, ce deuxième point étant atteint lorsque l'entrée en contact de l'outil d'usinage 2 et de la pièce à usiner 8 est détectée et,
- de mémoriser les différentes durées mesurées et de comparer ces durées à au moins une valeur prédéterminée de référence DR pour, en fonction de la vitesse de déplacement de l'outil d'usinage 2 entre le premier point et le deuxième point, déterminer une valeur de dérive thermique du deuxième point relativement au premier point,
- d'exploiter la valeur déterminée de la dérive thermique pour corriger le positionnement de l'outil d'usinage 2 par rapport à la pièce à usiner 8.

De manière avantageuse, le procédé de détection de l'état de l'outil d'usinage comprend des étapes consistant à :
- au moins préalablement au lancement du processus d'usinage 3, définir des indications électriques 40, 50, 60, 70 qui caractérisent chacune des phases opératoires 4 à 7 du processus d'usinage 3, à savoir, des indications de phase 40, 50, 60, 70 caractérisant, la première phase opératoire 4, la deuxième phase opératoire 5, la troisième phase opératoire 6 et la quatrième phase opératoire 7,
- pendant que le processus d'usinage 3 est en cours,
   . détecter au moins toute variation d'amplitude A de valeur au moins égale à la première valeur 90 prédéterminée de variation d'amplitude A d'une force extérieure 10 qui est appliquée à l'outil d'usinage 2, produire au moins un signal électrique 11 révélant la présence ou l'absence de cette variation d'amplitude A de valeur au moins égale à la première valeur 90 prédéterminée,
   . déterminer quelle est celle des phases opératoires 4 à 7 du processus d'usinage 3 qui est engagée en utilisant l'indication de phase 40, 50, 60, 70 qui caractérise cette phase opératoire, puis, en exploitant cette indication de phase et le signal électrique 11 révélant la présence ou l'absence de la variation d'amplitude A de valeur au moins égale à la première valeur 90 prédéterminée, considérer les quatre situations suivantes et pour chacune de ces situations élaborer des informations sur l'état de l'outil d'usinage 2 à savoir,
      a) pour la situation de la première phase 4,
         . en l'absence de signal 11 révélant une variation d'amplitude A de valeur au moins égale à la première valeur 90 prédéterminée de la force extérieure 10, élaborer une première information 12 indiquant un état de fonctionnement possible pour l'outil d'usinage 2,
         . en présence d'un signal 11 révélant une variation d'amplitude A de valeur au moins égale à la première valeur 90 prédéterminée de la force extérieure 10, élaborer une deuxième information 13 indiquant une collision possible avec l'outil d'usinage 2,
      b) pour la situation de la deuxième phase 5,
         . en l'absence de signal 11 révélant une variation d'amplitude A de valeur au moins égale à la première valeur 90 prédéterminée de la force extérieure 10, élaborer une troisième information 14 indiquant que l'outil d'usinage 2 est hors d'usage,
         . en présence d'un signal 11 révélant une variation d'amplitude A de valeur au moins égale à la première valeur 90 prédéterminée de la force extérieure 10, élaborer une quatrième information 15 indiquant l'élaboration en cours d'une opération d'usinage,
      c) pour la situation de la troisième phase 6,
         . en l'absence de signal 11 révélant une variation d'amplitude A de valeur au moins égale à la première valeur 90 prédéterminée de la force extérieure 10, élaborer une quatrième information 15 indiquant l'élaboration en cours d'une opération d'usinage,
         . en présence d'un signal révélant une variation d'amplitude A de valeur prédéterminée de la force extérieure, élaborer une troisième information 14 indiquant que l'outil d'usinage 2 est hors d'usage,
      d) pour la situation de la quatrième phase 7,
         . en l'absence de signal 11 révélant une variation d'amplitude A de valeur au moins égale à la première valeur 90 prédéterminée de la force extérieure 10, élaborer une troisième information 14 indiquant que l'outil d'usinage 2 est hors d'usage,
         . en présence d'un signal 11 révélant une variation d'amplitude A de valeur au moins égale à la première valeur 90 prédéterminée de la force extérieure 10, élaborer une cinquième information 16 indiquant que l'outil d'usinage 2 achève une opération d'usinage.

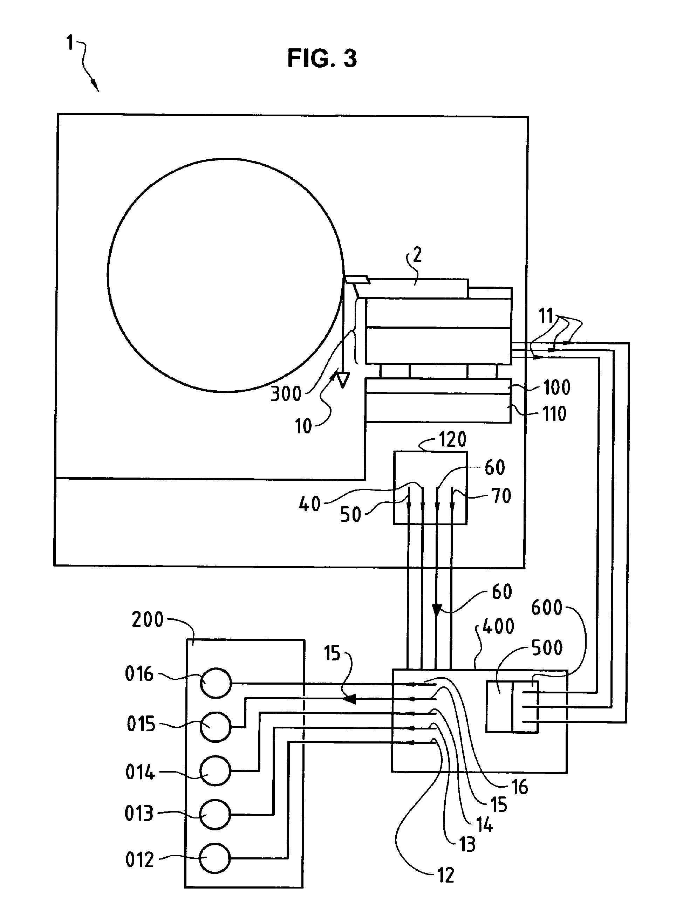

En figure 3, les informations 12 à 16 (première à cinquième informations) ont été symbolisées par des flèches repérées 12 à 16.

Tel que cela peut être déduit de l'exposé global qui précède, la surveillance de l'outil d'usinage 2 consiste à exploiter un signal 11 révélant la variation d'amplitude A de valeur au moins égale à la première valeur 90 prédéterminée d'amplitude A d'une force extérieure 10 appliquée à l'outil d'usinage 2 et non une valeur effectivement mesurée d'une force extérieure 10 appliquée à cet outil d'usinage 2.

Sur les machines d'usinage 1 commandées électriquement, voire électroniquement, par une unité de commande 120, les indications électriques 40, 50, 60, 70 (dites indications de phases) qui caractérisent les différentes phases opératoires de chaque processus d'usinage lié à un outil d'usinage 2 sont disponibles au niveau de ladite unité de commande 120.

En figure 3, les indications de phase 40 à 50 ont été symbolisées par des flèches repérées 40 à 50.

Lesdites première, deuxième, troisième, quatrième, cinquième informations (12 à 16) sont, par exemple, concrétisées par des signaux visuels affichés au moyen d'un premier ensemble fonctionnel 200, tel un tableau ou un écran, notamment au moyen de symboles 012, 013, 014, 015, 016, et ce, à l'attention d'un opérateur (non représenté) qui surveille le fonctionnement de la machine-outil 1.

En ce qui concerne plus particulièrement la troisième information 14 indiquant que l'outil d'usinage 2 est hors d'usage, elle est avantageusement exploitée pour interrompre le fonctionnement de la machine-outil 1.

Les moyens techniques pour la mise en oeuvre du procédé précité consistent en :
- un deuxième ensemble fonctionnel 300 permettant, pendant que le processus d'usinage 3 est en cours de détecter au moins toute variation d'amplitude A de valeur au moins égale à la première valeur 90 prédéterminée de variation d'amplitude A d'une force extérieure 10 qui est appliquée à l'outil d'usinage 2, produire au moins un signal électrique 11 révélant la présence ou l'absence de cette variation d'amplitude A de valeur au moins égale à la première valeur 90 prédéterminée,
- un troisième ensemble fonctionnel 400 permettant, d'exploiter, d'une part, l'une des indications électriques 40, 50, 60, 70 caractérisant l'une des phases opératoires 4 à 7 pour reconnaître quelle est celle des phases opératoires 4 à 7 du processus d'usinage qui est engagée et, d'autre part, le signal électrique 11 révélant la présence ou l'absence de la variation d'amplitude A de valeur au moins égale à la première valeur 90 prédéterminée, afin de considérer les quatre situations suivantes et, pour chacune de ces situations, élaborer des informations sur l'état de l'outil d'usinage 2 à savoir,
   a) pour la situation de la première phase 4,
      . en l'absence de signal 11 révélant une variation d'amplitude A de valeur au moins égale à la première valeur 90 prédéterminée, de la force de extérieure 10, élaborer une première information 12 indiquant un état de fonctionnement possible pour l'outil d'usinage 2,
      . en présence d'un signal 11 révélant une variation d'amplitude A de valeur au moins égale à la première valeur 90 prédéterminée de la force extérieure 10, élaborer une deuxième information 13 indiquant une collision possible avec l'outil d'usinage 2,
   b) pour la situation de la deuxième phase 5,
      . en l'absence de signal 11 révélant une variation d'amplitude A de valeur au moins égale à la première valeur 90 prédéterminée de la force extérieure 10, élaborer une troisième information 14 indiquant que l'outil d'usinage 2 est hors d'usage,
      . en présence d'un signal 11 révélant une variation d'amplitude A de valeur au moins égale à la première valeur 90 prédéterminée de la force extérieure 10, élaborer une quatrième information 15 indiquant l'élaboration en cours d'une opération d'usinage,
   c) pour la situation de la troisième phase 6,
      . en l'absence de signal 11 révélant une variation d'amplitude A de valeur au moins égale à la première valeur 90 prédéterminée de la force extérieure 10, élaborer une quatrième information 15 indiquant l'élaboration en cours d'une opération d'usinage,
      . en présence d'un signal révélant une variation d'amplitude A de valeur prédéterminée de la force extérieure, élaborer une troisième information 14 indiquant que l'outil d'usinage 2 est hors d'usage,
   d) pour la situation de la quatrième phase 7,
      . en l'absence de signal 11 révélant une variation d'amplitude A de valeur au moins égale à la première valeur 90 prédéterminée de la force extérieure 10, élaborer une troisième information 14 indiquant que l'outil d'usinage 2 est hors d'usage,
      . en présence d'un signal 11 révélant une variation d'amplitude A de valeur au moins égale à la première valeur 90 prédéterminée de la force extérieure 10, élaborer une cinquième information 16 indiquant que l'outil d'usinage 2 achève une opération d'usinage.

Dans une forme préférée de réalisation, le procédé comprend une étape consistant à se munir d'au moins un organe de détection 17, de type :
- comportant deux faces parallèles opposées, dont une première face 18 et une deuxième face 19, et
- délivrant un signal électrique 11 lorsqu'il est comprimé entre ces faces opposées dite première face 18 et deuxième face 19, selon une direction privilégiée dite première direction de déformation 20, et ce, par des actions opposées 21, 22 dite première (21) et deuxième (22) chacune appliquée orthogonalement sur l'une desdites faces opposées 18, 19.

Le deuxième ensemble fonctionnel 300 comprend au moins un organe de détection 17, de type :
- comportant deux faces parallèles opposées, dont une première face 18 et une deuxième face 19, et
- délivrant un signal électrique 11 lorsqu'il est comprimé entre ces faces opposées dite première face 18 et deuxième face 19, selon une direction privilégiée dite première direction de déformation 20, et ce, par des actions opposées 21, 22 dite première (21) et deuxième (22) chacune appliquée orthogonalement sur l'une desdites faces opposées 18, 19.

Selon une forme préférée de réalisation, on se munit d'un organe de détection 17 consistant en au moins un capteur de type piézo électrique.

Le procédé de l'invention comprend une étape consistant à disposer l'organe de détection 17 entre l'outil d'usinage 2 et la machine-outil 1, afin qu'une force extérieure 10 appliquée sur l'outil d'usinage 2 induise,
. l'application d'une première action 21, par l'outil d'usinage 2, sur une première face 18 de l'organe de détection 17, et, par réaction
. l'application d'une deuxième action 22, par la machine-outil 1, sur une deuxième face 19 de l'organe de détection 17,
l'intensité de la première action 21 et l'intensité de la deuxième action 22 variant en fonction de l'intensité de la force extérieure 10 appliquée à l'outil d'usinage 2,
cette disposition de l'organe de détection 17 étant réalisée de manière telle qu'il produise un signal électrique 11 qui reflète les variations d'amplitude A de la première action 21 et de la deuxième action 22 auxquelles il est soumis.

Conformément à l'invention, lorsque l'intensité de la première action 21 et l'intensité de la deuxième action 22 varient en fonction,
. d'une part, de la force extérieure 10 appliquée à l'outil d'usinage 2, et,
. d'autre part, de phénomènes vibratoires étrangers à l'outil d'usinage 2,
l'organe de détection 17 produisant un signal électrique 11 qui reflète les variations d'amplitude A de la première action 21 et de la deuxième action 22 auxquelles il est soumis, le procédé comprend une étape consistant à:
- recueillir le signal électrique 11 produit par l'organe de détection 17, et
- filtrer ce signal électrique 11 de manière à isoler du reste du signal une partie 23 de ce signal électrique 11 qui révèle une variation d'amplitude A de valeur au moins égale à la première valeur 90 prédéterminée, des actions dites première et deuxième actions opposées 21, 22.

Le troisième ensemble fonctionnel 400 comporte un premier étage fonctionnel 500 permettant de recueillir le signal électrique 11 produit par l'organe de détection 17, et lorsque l'intensité de la première action 21 et l'intensité de la deuxième action 22 varient en fonction,
. d'une part, de la force extérieure 10 appliquée à l'outil d'usinage 2, et,
. d'autre part, de phénomènes vibratoires (non représentés) étrangers à l'outil d'usinage 2 :
   - filtrer ce signal électrique 11 de manière à isoler une partie de ce signal électrique 11 qui révèle une variation d'amplitude A de valeur au moins égale à la première valeur 90 prédéterminée, des actions dites première et deuxième actions opposées 21, 22.

Parmi les phénomènes vibratoires étrangers à l'outil d'usinage 2, on désigne, notamment :
- des vibrations émises par d'autres usinages effectués sur la machine-outil 1 qui comporte l'outil d'usinage 2 équipé de l'organe de détection 17,
- des phénomènes électromagnétiques internes ou externes à la machine-outil.

Selon une forme préférée de l'invention, le procédé comprend des étapes consistant à :
- mettre en oeuvre plusieurs organes de détection 17 et,
- disposer ces organes de détection entre l'outil d'usinage 2 et la machine-outil 1,
- recueillir le signal électrique 11 produit par chaque organe de détection 17, et
- rechercher dans chaque signal électrique une partie 23 de ce signal électrique 11 qui révèle une variation d'amplitude A de valeur au moins égale à la première valeur 90 prédéterminée, des actions opposées dite première action et deuxième action auxquelles chaque organe de détection 17 est soumis, et
- comparer au moins certaines des différentes parties 23 de ces signaux électriques qui révèlent chacune une variation d'amplitude A de valeur au moins égale à la première valeur 90 prédéterminée, des actions opposées dite première action et deuxième action, pour s'assurer de la présence effective d'une variation d'amplitude A de valeur au moins égale à la première valeur 90 prédéterminée d'amplitude A d'une force extérieure 10 sur l'outil d'usinage 2.

Le troisième ensemble fonctionnel 400 comprend un deuxième étage fonctionnel 600 permettant :
- de recueillir plusieurs signaux électriques 11 produits par plusieurs organes de détection 17, et
- rechercher dans chaque signal électrique une partie 23 de ce signal électrique 11 qui révèle une variation d'amplitude A de valeur au moins égale à la première valeur 90 prédéterminée, des actions opposées dite première action et deuxième action auxquelles chaque organe de détection 17 est soumis, et
- comparer au moins certaines des différentes parties 23 de ces signaux électriques qui révèlent chacune une variation d'amplitude A de valeur au moins égale à la première valeur 90 prédéterminée, des actions opposées dite première action et deuxième action, pour révéler de la présence effective d'une variation d'amplitude A de valeur au moins égale à la première valeur 90 prédéterminée d'amplitude A d'une force extérieure 10 sur l'outil d'usinage 2.

De manière préférentielle, on se munit d'au moins deux organes de détection 17 et, pour les disposer, on choisit au moins deux points parmi trois points non alignés qui définissent un plan d'appui entre l'outil d'usinage 2 et la machine-outil 1.

Le deuxième ensemble fonctionnel 300 comprend au moins deux organes de détection 17 qui sont disposés en au moins deux points parmi trois points non alignés qui définissent un plan d'appui entre l'outil d'usinage 2 et la machine-outil 1.

Dans un mode préféré de réalisation de l'invention, après s'être munit d'au moins un organe de détection 17, de type,
. comportant deux faces parallèles opposées, dont une première face 18 et une deuxième face 19, et
. délivrant un signal électrique 11, lorsqu'il est comprimé entre ces faces opposées 18, 19, et ce, selon une direction privilégiée, dite première direction de déformation 20, et ce, par des actions opposées 21, 22 dites première action 21 et deuxième action 22, chacune appliquée orthogonalement sur l'une desdites faces opposées 18, 19,
pour interposer l'organe de détection 17 entre la machine-outil 1 et l'outil d'usinage 2 de manière telle que cet organe de détection 17 soit soumis aux variations d'une force extérieure 9 appliquée à l'outil d'usinage 2 :
- on constitue au moins une zone 24 qui, présentant deux surfaces parallèles opposées 25, 26, dite première surface 25 et deuxième surface 26, est élastiquement déformable par compression selon une direction privilégiée de déformation qui, dite deuxième direction de déformation 27, est sensiblement orthogonale auxdites première surface 25 et deuxième surface 26,
- on situe la zone 24 élastiquement déformable en compression, entre l'outil d'usinage 2 et la partie réceptrice 100 de la machine-outil 1 de manière telle qu'il soit sollicité en compression lorsque l'outil d'usinage 2 reçoit une force extérieure 10,
- on place l'organe de détection 17 contre une première surface 25 de la zone 24 élastiquement déformable en compression, avec sa première direction de déformation 20 orientée parallèlement à la deuxième direction de déformation 27 de la zone 24 élastiquement déformable en compression,
- on bride l'organe de détection 17 sur la zone 24 élastiquement déformable en compression au moyen d'un organe de bridage 29, et ce,
   . de façon à lui imposer une contrainte de compression d'une valeur prédéterminée, et
   . de manière telle que la compression de la zone 24 élastiquement déformable en compression sous l'effet d'une force extérieure 10 appliquée à l'outil d'usinage 2, réduise proportionnellement la valeur contrainte de compression imposée à l'organe de détection 17 et, par conséquent, modifie proportionnellement le signal électrique 11 généré par ledit organe de détection 17.

Le deuxième ensemble fonctionnel 300 comprend
- au moins un organe de détection 17, de type,
   . comportant deux faces parallèles opposées, dont une première face 18 et une deuxième face 19, et
   . délivrant un signal électrique 11 lorsqu'il est comprimé entre ces faces opposées 18, 19, et ce, selon une direction privilégiée, dite première direction de déformation 20, et ce, par des actions opposées 21, 22 dites première action 21 et deuxième action 22, chacune appliquée orthogonalement sur l'une desdites faces opposées 18, 19,
- au moins une zone 24 qui,
   . présente deux surfaces parallèles opposées 25, 26, dite première surface 25 et deuxième surface 26, est élastiquement déformable par compression selon une direction privilégiée de déformation qui, dite deuxième direction de déformation 27, est sensiblement orthogonale auxdites première surface 25 et deuxième surface 26,
   . est disposé entre l'outil d'usinage 2 et la partie réceptrice 100 de la machine-outil 1 de manière telle qu'il soit sollicité en compression lorsque l'outil d'usinage 2 reçoit une force extérieure 10,
   . porte l'organe de détection 17 contre sa première surface 25, avec la première direction de déformation 20 de cet organe de détection 17 orientée parallèlement à la deuxième direction de déformation 27 de la zone 24 élastiquement déformable en compression, le dit organe de détection 17 étant bridé sur la zone 24 élastiquement déformable en compression au moyen d'un organe de bridage 29, et ce,
      .. de façon à lui imposer une contrainte de compression d'une valeur prédéterminée, et
      .. de manière telle que la compression de la zone 24 élastiquement déformable en compression sous l'effet d'une force extérieure 10 appliquée à l'outil d'usinage 2, réduise proportionnellement la valeur contrainte de compression imposée à l'organe de détection 17 et, par conséquent, modifie proportionnellement le signal électrique 11 généré par ledit organe de détection 17.

Dans une forme préférée, la partie réceptrice 100 de la machine-outil 1 comprend essentiellement une platine associée à un chariot 110 de guidage et de déplacement en translation, cette platine présentant une troisième face 130 pour la fixation d'au moins un deuxième ensemble fonctionnel 300 destiné à porter un outil d'usinage 2.

Selon l'invention, pour constituer le deuxième ensemble fonctionnel 300 :
- on se munit d'un premier bloc 150 en matériau rigide comportant au moins deux faces distinctes 151, 152 dont une quatrième 151 et une cinquième face 152, et on constitue chaque zone 24 élastiquement déformable en compression de manière qu'ils fassent saillie sur la quatrième face 151 dudit premier bloc 150,
- on place le premier bloc 150 en appui sur la partie réceptrice 100 de la machine-outil 1, et ce, par sa quatrième face 151 qui comporte au moins une zone 24 élastiquement déformable en compression,
- on fixe le premier bloc 150 sur la partie réceptrice 100 de la machine-outil 1 en utilisant au moins un organe de bridage 29 utilisé pour brider un organe de détection 17 sur la zone 24 élastiquement déformable en compression qui lui est associé,
- on fixe au moins directement l'outil d'usinage 2 sur la cinquième face 152 du premier bloc 150.

Avantageusement les faces dites quatrième et cinquième du premier bloc 150 sont parallèles.

Avantageusement, pour fixer l'outil d'usinage 2 sur le premier bloc 150, on se munit d'un deuxième bloc 160 en matériau rigide sur lequel on fixe préalablement l'outil d'usinage 2 et c'est le ledit deuxième bloc 160 qu'on fixe sur la cinquième face 152 du dit premier bloc 150.

Les organes de fixation et autres éléments utilisés pour associer l'outil d'usinage au deuxième bloc 160 ne sont pas représentés.

En ce qui concerne les organes de fixation 30 utilisés pour associer le deuxième bloc 160 au premier bloc 150, un seul de ces organes a été représenté.

Cette solution de fixation de l'outil d'usinage 2 sur la partie réceptrice 100 de la machine-outil 1 est particulièrement avantageuse en ce sens que le bridage de l'outil d'usinage 2 sur la partie réceptrice 100 de la machine-outil ne perturbe pas le réglage de précontrainte obtenu au moyen des organes de bridage 29.

En outre les outils d'usinage peuvent être changés sans perturber les réglages préalablement effectués.

Les ensembles fonctionnels et éléments fonctionnels annoncés plus avant consistent avantageusement en des appareils ou des parties d'appareils de traitement des signaux électriques, fonctionnant sous l'effet de logiciels.

## Revendications

1. Procédé de détection de l'état d'un outil d'usinage (2) utilisé sur une machine-outil (1) qui met en oeuvre au moins un tel outil d'usinage (2) pour, lors d'un processus d'usinage (3) comprenant plusieurs phases opératoires (4, 5, 6, 7), réaliser au moins une opération d'usinage sur une pièce, dite pièce à usiner (8),
lesdites phases opératoires (4 à 7) consistant en au moins les phases que sont :
. une première phase opératoire (4), telle une phase d'approche rapide, au cours de laquelle l'outil d'usinage (2) n'est pas en contact avec la pièce à usiner (8) et ne reçoit aucune action de ladite pièce à usiner (8),
. une deuxième phase opératoire (5), telle une phase d'approche lente, au cours de laquelle l'outil d'usinage (2) entre en contact avec la pièce à usiner (8) et reçoit une action dont l'amplitude (A) croît d'une valeur minimale à une valeur maximale, dite première valeur (90) prédéterminée,
. une troisième phase opératoire (6), telle une phase d'usinage, au cours de laquelle l'outil d'usinage (2) procède à une opération d'usinage de la pièce à usiner (8) et reçoit une action dont l'amplitude moyenne reste sensiblement constante,
. une quatrième phase opératoire (7), telle une phase de fin d'usinage, au cours de laquelle l'outil d'usinage (2) achève une opération d'usinage de la pièce à usiner (8) et reçoit une action dont l'amplitude (A) décroît d'une valeur maximale, dite première valeur (90) prédéterminée, à une valeur minimale,
selon lequel procédé pour détecter l'état de l'outil d'usinage (2), on surveille les variations (9) d'amplitude (A) d'une force extérieure (10) qui est appliquée à cet outil d'usinage (2), et on recherche l'apparition d'une variation d'amplitude (A) de valeur au moins égale à la première valeur (90) prédéterminée, et
a) si une telle variation d'amplitude (A) de valeur au moins égale à la première valeur (90) prédéterminée est détectée, on vérifie si, en fonction de la phase opératoire du processus d'usinage dans laquelle l'outil d'usinage (2) se trouve, il est possible qu'une telle variation d'amplitude (A) de valeur au moins égale à la première valeur (90) prédéterminée d'amplitude (A) d'une force extérieure (10) appliquée à l'outil d'usinage (2) puisse se produire, et
- en cas de réponse positive, on conclut que l'outil d'usinage (2) est en état de fonctionnement,
- en cas de réponse négative, on conclut que l'outil d'usinage (2) est hors d'usage,
b) si une telle variation d'amplitude (A) de valeur au moins égale à la première valeur (90) prédéterminée n'est pas détectée, on vérifie si, en fonction de la phase opératoire du processus d'usinage dans laquelle l'outil d'usinage (2) se trouve, il est possible qu'une telle variation d'amplitude (A) de valeur au moins égale à la première valeur (90) prédéterminée d'amplitude (A) d'une force extérieure (10) appliquée à l'outil d'usinage (2) ne se produise pas, et
- en cas de réponse positive, on conclut que l'outil d'usinage (2) est en état de fonctionnement,
- en cas de réponse négative, on conclut que l'outil d'usinage (2) est hors d'usage,
- ce procédé comprenant également des étapes qui consistent :
- à se munir d'au moins un organe, dit organe de détection (17), permettant:
. d'une part, de recueillir au moins une variation d'amplitude (A) de valeur au moins égale à la première valeur (90) prédéterminée d'amplitude (A) d'une force extérieure (10) appliquée à l'outil d'usinage (2), et
. d'autre part, de générer un signal électrique (11) révélant la présence de cette variation d'amplitude (A) de valeur au moins égale à la première valeur (90) prédéterminée,
- à interposer cet organe de détection (17) entre la machine-outil (1) et l'outil d'usinage (2) de manière telle qu'il soit soumis au moins aux variations d'amplitude (A) d'une force extérieure (10) appliquée à l'outil d'usinage (2).

2. Procédé selon la revendication 1, **caractérisée en ce que** lorsque l'coutil d'usinage (2) est utilisé pour réaliser des usinages successifs identiques, au cours d'un premier nombre prédéterminé (N1) de ces usinages identiques successifs, il comprend les étapes selon lesquelles :
- on mémorise les valeurs maximales (VM) successives de variation d'amplitude (A) d'une force extérieure (10) appliquée à l'outil d'usinage (2) et,
- on effectue une moyenne pondérée de ces valeurs maximales (VM) successives,
- on détermine si cette moyenne pondérée a une tendance d'évolution remarquable par une pente, et en cas de réponse positive, on détermine si la pente de l'évolution de la moyenne excède une valeur de seuil prédéterminée, auquel cas, on conclut que l'outil d'usinage (2) est usé.

3. Procédé selon l'une quelconque des revendications 1 ou 2, **caractérisé en ce que,** lorsque l'outil d'usinage (2) est utilisé pour réaliser des usinages successifs identiques, au cours d'un deuxième nombre prédéterminé (N2) de ces usinages successifs identiques, il comprend les étapes selon lesquelles :
- on mesure la durée (D) du trajet effectué par l'outil d'usinage (2), à une vitesse de déplacement déterminée, entre,
. un premier point déterminé de la trajectoire de l'outil d'usinage (2) pendant la première phase opératoire (4), et
. un deuxième point de la trajectoire de cet outil d'usinage (2) pendant la deuxième phase opératoire (2), ce deuxième point étant atteint lorsqu'on détecte que l'outil d'usinage (2) entre en contact avec la pièce à usiner (8) et,
- on mémorise les différentes durées mesurées et on compare ces durées à au moins une valeur prédéterminée de référence (DR) pour, en fonction de la vitesse de déplacement de l'outil d'usinage (2) entre le premier point et le deuxième point, déterminer une valeur de dérive thermique du deuxième point relativement au premier point,
- on exploite la valeur déterminée de la dérive thermique pour corriger le positionnement de l'outil d'usinage (2) par rapport à la pièce à usiner (8).

4. Procédé selon l'une quelconque des revendications 1 à 3, **caractérisé en ce qu'**il comprend les étapes consistant à :
- au moins préalablement au lancement du processus d'usinage (3), définir des indications électriques (40, 50, 60, 70) qui caractérisent chacune des phases opératoires (4 à 7) du processus d'usinage (3), à savoir, des indications de phase (40, 50, 60, 70) caractérisant, la première phase opératoire (4), la deuxième phase opératoire (5), la troisième phase opératoire (6) et la quatrième phase opératoire (7),
- pendant que le processus d'usinage (3) est en cours,
. détecter au moins toute variation d'amplitude (A) de valeur au moins égale à la première valeur (90) prédéterminée de variation d'amplitude (A) d'une force extérieure (10) qui est appliquée à l'outil d'usinage (2), produire au moins un signal électrique (11) révélant la présence ou l'absence de cette variation d'amplitude (A) de valeur au moins égale à la première valeur (90) prédéterminée,
. déterminer quelle est celle des phases opératoires (4 à 7) du processus d'usinage (3) qui est engagée en utilisant l'indication de phase (40, 50, 60, 70) qui caractérise cette phase opératoire, puis, en exploitant cette indication de phase et le signal électrique (11) révélant la présence ou l'absence de la variation d'amplitude (A) de valeur au moins égale à la première valeur (90) prédéterminée, considérer les quatre situations suivantes et pour chacune de ces situations élaborer des informations sur l'état de l'outil d'usinage (2) à savoir,
a) pour la situation de la première phase (4),
. en l'absence de signal (11) révélant une variation d'amplitude (A) de valeur au moins égale à la première valeur (90) prédéterminée de la force extérieure (10), élaborer une première information (12) indiquant un état de fonctionnement possible pour l'outil d'usinage (2),
. en présence d'un signal (11) révélant une variation d'amplitude (A) de valeur au moins égale à la première valeur (90) prédéterminée de la force extérieure (10), élaborer une deuxième information (13) indiquant une collision possible avec l'outil d'usinage (2),
b) pour la situation de la deuxième phase (5),
. en l'absence de signal (11) révélant une variation d'amplitude (A) de valeur au moins égale à la première valeur (90) prédéterminée de la force extérieure (10), élaborer une troisième information (14) indiquant que l'outil d'usinage (2) est hors d'usage,
. en présence d'un signal (11) révélant une variation d'amplitude (A) de valeur au moins égale à la première valeur (90) prédéterminée de la force extérieure (10), élaborer une quatrième information (15) indiquant l'élaboration en cours d'une opération d'usinage,
c) pour la situation de la troisième phase (6),
. en l'absence de signal (11) révélant une variation d'amplitude (A) de valeur au moins égale à la première valeur (90) prédéterminée de la force extérieure (10), élaborer une quatrième information (15) indiquant l'élaboration en cours d'une opération d'usinage,
. en présence d'un signal révélant une variation d'amplitude (A) de valeur prédéterminée de la force extérieure, élaborer une troisième information (14) indiquant que l'outil d'usinage (2) est hors d'usage,
d) pour la situation de la quatrième phase (7),
. en l'absence de signal (11) révélant une variation d'amplitude (A) de valeur au moins égale à la première valeur (90) prédéterminée de la force extérieure (10), élaborer une troisième information (14) indiquant que l'outil d'usinage (2) est hors d'usage,
. en présence d'un signal (11) révélant une variation d'amplitude (A) de valeur au moins égale à la première valeur (90) prédéterminée de la force extérieure (10), élaborer une cinquième information (16) indiquant que l'outil d'usinage (2) achève une opération d'usinage.

5. Procédé selon l'une quelconque des revendications 1 à 4, **caractérisé en ce qu'**il comprend une étape consistant à se munir d'au moins un organe de détection (17), de type :
- comportant deux faces parallèles opposées, dont une première face (18) et une deuxième face (19), et
- délivrant un signal électrique (11) lorsqu'il est comprimé entre ces faces opposées dite première face (18) et deuxième face (19), selon une direction privilégiée dite première direction de déformation (20), et ce, par des actions opposées (21, 22) dite première (21) et deuxième (22) chacune appliquée orthogonalement sur l'une desdites faces opposées (18, 19).

6. Procédé selon la revendication 5, **caractérisé en ce qu'**il comprend une étape selon laquelle on se munit d'un organe de détection (17) consistant en un au moins un capteur de type piézo électrique.

7. Procédé selon l'une quelconque des revendications 1 à 6, **caractérisé en ce qu'**il comprend une étape consistant à disposer l'organe de détection (17) entre l'outil d'usinage (2) et la machine-outil (1), afin qu'une force extérieure (10) appliquée sur l'outil d'usinage (2) induise :
- l'application d'une première action (21), par l'outil d'usinage (2), sur une première face (18) de l'organe de détection (17), et, par réaction
- l'application d'une deuxième action (22), par la machine-outil (1), sur une deuxième face (19) de l'organe de détection (17),
l'intensité de la première action (21) et l'intensité de la deuxième action (22) variant en fonction de l'intensité de la force extérieure (10) appliquée à l'outil d'usinage (2),
cette disposition de l'organe de détection (17) étant réalisée de manière telle qu'il produise un signal électrique (11) qui reflète les variations d'amplitude (A) de la première action (21) et de la deuxième action (22) auxquelles il est soumis.

8. Procédé selon la revendication 7, **caractérisé en ce que,** lorsque l'intensité de la première action (21) et l'intensité de la deuxième action (22) varient en fonction,
. d'une part, de la force extérieure (10) appliquée à l'outil d'usinage (2), et,
. d'autre part, de phénomènes vibratoires étrangers à l'outil d'usinage (2),
l'organe de détection (17) produisant un signal électrique (11) qui reflète les variations d'amplitude (A) de la première action (21) et de la deuxième action (22) auxquelles il est soumis, le procédé comprend des étapes consistant à :
- recueillir le signal électrique (11) produit par l'organe de détection (17), et
- filtrer ce signal électrique (11) de manière à isoler du reste du signal une partie (23) de ce signal électrique (11) qui révèle une variation d'amplitude (A) de valeur au moins égale à la première valeur (90) prédéterminée, des actions dites première et deuxième actions opposées (21, 22).

9. Procédé selon l'une quelconque des revendications 1 à 8, **caractérisé en ce qu'**il comprend des étapes consistant à :
- mettre en oeuvre plusieurs organes de détection (17) et,
- disposer ces organes de détection entre l'outil d'usinage (2) et la machine-outil (1),
- recueillir le signal électrique (11) produit par chaque organe de détection (17), et
- rechercher dans chaque signal électrique une partie (23) de ce signal électrique (11) qui révèle une variation d'amplitude (A) de valeur au moins égale à la première valeur (90) prédéterminée, des actions opposées dite première action et deuxième action auxquelles chaque organe de détection (17) est soumis, et
- comparer au moins certaines des différentes parties (23) de ces signaux électriques qui révèlent chacune une variation d'amplitude (A) de valeur au moins égale à la première valeur (90) prédéterminée, des actions opposées dite première action et deuxième action, pour s'assurer de la présence effective d'une variation d'amplitude (A) de valeur au moins égale à la première valeur (90) prédéterminée d'amplitude (A) d'une force extérieure (10) sur l'outil d'usinage (2).

10. Procédé selon l'une quelconque des revendications 1 à 9, **caractérisé en ce qu'**il comprend des étapes selon lesquelles :
- on se munit d'au moins deux organes de détection (17) et, pour les disposer,
- on choisit au moins deux points parmi trois points non alignés qui définissent un plan d'appui entre l'outil d'usinage (2) et la machine-outil (1).

11. Procédé selon l'une quelconque des revendications 1 à 10, **caractérisé en ce qu'**il comprend des étapes selon lesquelles, après s'être munit d'au moins un organe de détection (17), de type,
. comportant deux faces parallèles opposées, dont une première face (18) et une deuxième face (19), et
. délivrant un signal électrique (11), lorsqu'il est comprimé entre ces faces opposées (18, 19), et ce, selon une direction privilégiée, dite première direction de déformation (20), et ce, par des actions opposées (21, 22) dites première action (21) et deuxième action (22), chacune appliquée orthogonalement sur l'une desdites faces opposées (18, 19),
pour interposer l'organe de détection (17) entre la machine-outil (1) et l'outil d'usinage (2) de manière telle que cet organe de détection (17) soit soumis aux variations d'une force extérieure (9) appliquée à l'outil d'usinage (2) :
- on constitue au moins une zone (24) qui, présentant deux surfaces parallèles opposées (25, 26), dite première surface (25) et deuxième surface (26), est élastiquement déformable par compression selon une direction privilégiée de déformation qui, dite deuxième direction de déformation (27), est sensiblement orthogonale auxdites première surface (25) et deuxième surface (26),
- on situe la zone (24) élastiquement déformable en compression, entre l'outil d'usinage (2) et la partie réceptrice (100) de la machine-outil (1) de manière telle qu'il soit sollicité en compression lorsque l'outil d'usinage (2) reçoit une force extérieure (10),
- on place l'organe de détection (17) contre une première surface (25) de la zone (24) élastiquement déformable en compression, avec sa première direction de déformation (20) orientée parallèlement à la deuxième direction de déformation (27) de la zone (24) élastiquement déformable en compression,
- on bride l'organe de détection (17) sur la zone (24) élastiquement déformable en compression au moyen d'un organe de bridage (29), et ce,
. de façon à lui imposer une contrainte de compression d'une valeur prédéterminée, et
. de manière telle que la compression de la zone (24) élastiquement déformable en compression sous l'effet d'une force extérieure (10) appliquée à l'outil d'usinage (2), réduise proportionnellement la valeur contrainte de compression imposée à l'organe de détection (17) et, par conséquent, modifie proportionnellement le signal électrique (11) généré par ledit organe de détection (17).

12. Procédé selon l'un quelconque des revendications 1 à 11, **caractérisé en ce qu'**il comprend les étapes selon lesquelles :
- on se munit d'un premier bloc (150) en matériau rigide comportant au moins deux faces distinctes (151, 152) dont une quatrième (151) et une cinquième face (152), et on constitue chaque zone (24) élastiquement déformable en compression de manière qu'ils fassent saillie sur la quatrième face (151) dudit premier bloc (150),
- on place le premier bloc (150) en appui sur la partie réceptrice (100) de la machine-outil (1), et ce, par sa quatrième face (151) qui comporte au moins une zone (24) élastiquement déformable en compression,
- on fixe le premier bloc (150) sur la partie réceptrice (100) de la machine-outil (1) en utilisant au moins un organe de bridage (29) utilisé pour brider un organe de détection (17) sur la zone (24) élastiquement déformable en compression qui lui est associé,
- on fixe au moins directement l'outil d'usinage (2) sur la cinquième face (152) du premier bloc (150).

13. Procédé selon la revendication 12, **caractérisé en ce que,** pour fixer l'outil d'usinage (2) sur le premier bloc (150), on se munit d'un deuxième bloc (160) en matériau rigide sur lequel on fixe préalablement l'outil d'usinage (2) et c'est ledit deuxième bloc (160) qu'on fixe sur la cinquième face (152) du dit premier bloc (150).

14. Procédé selon l'une quelconque des revendications 1 à 13, **caractérisé en ce que,** pour prédéterminer la première valeur (90) d'amplitude (A) de la force extérieure (10) appliquée à l'outil d'usinage (2), le procédé comprend au moins une étape préparatoire, au cours de laquelle on mémorise la valeur maximale de la variation d'amplitude (A) de cette force extérieure (10), lors d'au moins l'une des phases que sont :
- la deuxième phase opératoire (5), au cours de laquelle l'outil d'usinage (2) entre en contact avec la pièce à usiner (8) et reçoit une action dont l'amplitude (A) croît d'une valeur minimale à une valeur maximale, dite première valeur (90) prédéterminée, et
- la quatrième phase opératoire (7), au cours de laquelle l'outil d'usinage (2) achève une opération d'usinage de la pièce à usiner (8) et reçoit une action dont l'amplitude (A) décroît d'une valeur maximale, dite première valeur (90) prédéterminée, à une valeur minimale.

15. Moyens pour la mise en oeuvre du procédé selon l'une quelconque des revendications 1 à 14, consistant en :
- un deuxième ensemble fonctionnel (300) permettant, pendant que le processus d'usinage (3) est en cours,
• de surveiller les variations (9) d'amplitude (A) d'une force extérieure (10) qui est appliquée à cet outil d'usinage (2), et
• de rechercher l'apparition d'une variation d'amplitude (A) de valeur au moins égale à la première valeur (90) prédéterminée, et
• de détecter au moins la variation d'amplitude (A) de valeur au moins égale à la première valeur (90) prédéterminée d'amplitude (A) d'une force extérieure (10) qui est appliquée à l'outil d'usinage (2),
- un troisième ensemble fonctionnel (400) permettant,
a) si une telle variation d'amplitude (A) de valeur au moins égale à la première valeur (90) prédéterminée est détectée, de vérifier si, en fonction de la phase opératoire du processus d'usinage dans laquelle l'outil d'usinage (2) se trouve, il est possible qu'une telle variation d'amplitude (A) de valeur au moins égale à la première valeur (90) prédéterminée d'amplitude (A) d'une force extérieure (10) appliquée à l'outil d'usinage (2) puisse se produire, et
- en cas de réponse positive, de conclure que l'outil d'usinage (2) est en état de fonctionnement,
- en cas de réponse négative, de conclure que l'outil d'usinage (2) est hors d'usage,
b) si une telle variation d'amplitude (A) de valeur au moins égale à la première valeur (90) prédéterminée n'est pas détectée, de vérifier si, en fonction de la phase opératoire du processus d'usinage dans laquelle l'outil d'usinage (2) se trouve, il est possible qu'une telle variation d'amplitude (A) de valeur au moins égale à la première valeur (90) prédéterminée d'amplitude (A) d'une force extérieure (10) appliquée à l'outil d'usinage (2) ne se produise pas, et
- en cas de réponse positive, de conclure que l'outil d'usinage (2) est en état de fonctionnement,
- en cas de réponse négative, de conclure que l'outil d'usinage (2) est hors d'usage,
ces moyens étant **caractérisés en ce que** le deuxième ensemble fonctionnel (300) comprend au moins un organe, dit organe de détection (17), permettant :
. d'une part, de recueillir au moins une variation d'amplitude (A) de valeur au moins égale à la première valeur (90) prédéterminée d'amplitude (A) d'une force extérieure (10) appliquée à l'outil d'usinage (2), et
. d'autre part, de générer un signal électrique (11) révélant la présence de cette variation d'amplitude (A) de valeur au moins égale à la première valeur (90) prédéterminée.

16. Moyens selon la revendication 15, **caractérisés en ce que** le deuxième ensemble fonctionnel (300) comprend au moins un organe, dit organe de détection (17), permettant :
. d'une part, de recueillir au moins une variation d'amplitude (A) de valeur au moins égale à la deuxième valeur (91) prédéterminée d'amplitude (A) d'une force extérieure appliquée à l'outil, cette deuxième valeur (91) étant inférieure à ladite première valeur (90), et
. d'autre part, de générer un signal électrique (11) révélant la présence de cette variation d'amplitude (A) de valeur au moins égale à la deuxième valeur (91) prédéterminée.

17. Moyens selon la revendication 15, **caractérisés en ce que** le troisième ensemble fonctionnel (400) est de type permettant d'exploiter la présence ou l'absence d'une variation d'amplitude (A) de valeur au moins égale à la deuxième valeur (91) prédéterminée, afin, lorsqu'une telle deuxième valeur (91) de variation d'amplitude (A) de la force extérieure (10) est détectée, d'établir que l'outil d'usinage (2) est hors d'usage, par usure.

18. Moyens selon l'une quelconque des revendications 15 à 17, **caractérisés en ce que** le troisième ensemble fonctionnel (400) comprend des éléments fonctionnels qui, lorsque l'outil d'usinage (2) est utilisé pour réaliser des usinages successifs identiques, permettent, au cours d'un premier nombre prédéterminé (N1) de ces usinages identiques successifs :
- de mémoriser les valeurs maximales (VM) successives de variation d'amplitude (A) d'une force extérieure (10) appliquée à l'outil d'usinage (2)
- d'effectuer une moyenne pondérée de ces valeurs maximales (VM) successives,
- de déterminer si cette moyenne pondérée a une tendance d'évolution remarquable par une pente, et en cas de réponse positive, de déterminer si la pente de l'évolution de la moyenne excède une valeur de seuil prédéterminée, auquel cas, de conclure que l'outil d'usinage (2) est usé.

19. Moyens selon l'une quelconque des revendications 15 à 18, **caractérisés en ce que** le troisième ensemble fonctionnel (400) comprend des éléments fonctionnels qui, lorsque l'outil d'usinage (2) est utilisé pour réaliser des usinages successifs identiques, permettent, au cours d'un deuxième nombre prédéterminé (N2) de ces usinages successifs identiques :
- de mesurer la durée du trajet effectué par l'outil d'usinage (2), à une vitesse déterminée, entre,
. un premier point déterminé de la trajectoire de l'outil d'usinage (2) pendant la première phase opératoire (4), et
. un deuxième point de la trajectoire de cet outil d'usinage (2) pendant la deuxième phase opératoire (2), ce deuxième point étant atteint lorsque l'entrée en contact de l'outil d'usinage (2) et de la pièce à usiner (8) est détecter et,
- de mémoriser les différentes durées mesurées et de comparer ces durées à au moins une valeur prédéterminée de référence (DR) pour, en fonction de la vitesse de déplacement de l'outil d'usinage (2) entre le premier point et le deuxième point, déterminer une valeur de dérive thermique du deuxième point relativement au premier point,
- d'exploiter la valeur déterminée de la dérive thermique pour corriger le positionnement de l'outil d'usinage (2) par rapport à la pièce à usiner (8).

20. Moyens selon l'une quelconque des revendications 15 à 17, **caractérisés en ce qu'**ils consistent en :
- un deuxième ensemble fonctionnel (300) permettant, pendant que le processus d'usinage (3) est en cours de détecter au moins toute variation d'amplitude A de valeur au moins égale à la première valeur (90) prédéterminée de variation d'amplitude (A) d'une force extérieure (10) qui est appliquée à l'outil d'usinage (2), produire au moins un signal électrique (11) révélant la présence ou l'absence de cette variation d'amplitude (A) de valeur au moins égale à la première valeur (90) prédéterminée,
- un troisième ensemble fonctionnel (400) permettant, d'exploiter, d'une part, l'une des indications électriques (40, 50, 60, 70) caractérisant l'une des phases opératoires (4 à 7) pour reconnaître quelle est celle des phases opératoires (4 à 7) du processus d'usinage qui est engagée et, d'autre part, le signal électrique (11) révélant la présence ou l'absence de la variation d'amplitude (A) de valeur au moins égale à la première valeur (90) prédéterminée, afin de considérer les quatre situations suivantes et, pour chacune de ces situations, élaborer des informations sur l'état de l'outil d'usinage (2) à savoir,
a) pour la situation de la première phase (4),
. en l'absence de signal (11) révélant une variation d'amplitude (A) de valeur au moins égale à la première valeur (90) prédéterminée, de la force de extérieure (10), élaborer une première information (12) indiquant un état de fonctionnement possible pour l'outil d'usinage (2),
. en présence d'un signal (11) révélant une variation d'amplitude (A) de valeur au moins égale à la première valeur (90) prédéterminée de la force extérieure (10), élaborer une deuxième information (13) indiquant une collision possible avec l'outil d'usinage (2),
b) pour la situation de la deuxième phase (5),
. en l'absence de signal (11) révélant une variation d'amplitude (A) de valeur au moins égale à la première valeur (90) prédéterminée de la force extérieure (10), élaborer une troisième information (14) indiquant que l'outil d'usinage (2) est hors d'usage,
. en présence d'un signal (11) révélant une variation d'amplitude (A) de valeur au moins égale à la première valeur (90) prédéterminée de la force extérieure (10), élaborer une quatrième information (15) indiquant l'élaboration en cours d'une opération d'usinage,
c) pour la situation de la troisième phase (6),
. en l'absence de signal (11) révélant une variation d'amplitude (A) de valeur au moins égale à la première valeur (90) prédéterminée de la force extérieure (10), élaborer une quatrième information (15) indiquant l'élaboration en cours d'une opération d'usinage,
. en présence d'un signal révélant une variation d'amplitude (A) de valeur prédéterminée de la force extérieure, élaborer une troisième information (14) indiquant que l'outil d'usinage (2) est hors d'usage,
d) pour la situation de la quatrième phase (7),
. en l'absence de signal (11) révélant une variation d'amplitude (A) de valeur au moins égale à la première valeur (90) prédéterminée de la force extérieure (10), élaborer une troisième information (14) indiquant que l'outil d'usinage (2) est hors d'usage,
. en présence d'un signal (11) révélant une variation d'amplitude (A) de valeur au moins égale à la première valeur (90) prédéterminée de la force extérieure (10), élaborer une cinquième information (16) indiquant que l'outil d'usinage (2) achève une opération d'usinage.

21. Moyens selon l'une quelconque des revendications 15 à 20, **caractérisés en ce que** le deuxième ensemble fonctionnel (300) comprend au moins un organe de détection (17), de type :
- comportant deux faces parallèles opposées, dont une première face (18) et une deuxième face (19), et
- délivrant un signal électrique (11) lorsqu'il est comprimé entre ces faces opposées dite première face (18) et deuxième face (19), selon une direction privilégiée dite première direction de déformation (20), et ce, par des actions opposées (21, 22) dite première (21) et deuxième (22) chacune appliquée orthogonalement sur l'une desdites faces opposées (18, 19).

22. Moyens selon l'une quelconque des revendications 15 à 21, **caractérisés en ce que** le troisième ensemble fonctionnel (400) comporte un premier étage fonctionnel (500) permettant de recueillir le signal électrique (11) produit par l'organe de détection (17), et lorsque l'intensité de la première action (21) et l'intensité de la deuxième action (22) varient en fonction,
. d'une part, de la force extérieure (10) appliquée à l'outil d'usinage (2), et,
. d'autre part, de phénomènes vibratoires (non représentés) étrangers à l'outil d'usinage (2) :
- filtrer ce signal électrique (11) de manière à isoler une partie de ce signal électrique (11) qui révèle une variation d'amplitude (A) de valeur au moins égale à la première valeur (90) prédéterminée, des actions dites première et deuxième actions opposées (21, 22).

23. Moyens selon l'une quelconque des revendications 15 à 22, **caractérisés en ce que** le troisième ensemble fonctionnel (400) comprend un deuxième étage fonctionnel (600) permettant :
- de recueillir plusieurs signaux électriques (11) produits par plusieurs organes de détection (17), et
- rechercher dans chaque signal électrique une partie (23) de ce signal électrique (11) qui révèle une variation d'amplitude (A) de valeur au moins égale à la première valeur (90) prédéterminée, des actions opposées dite première action et deuxième action auxquelles chaque organe de détection (17) est soumis, et
- comparer au moins certaines des différentes parties (23) de ces signaux électriques qui révèlent chacune une variation d'amplitude (A) de valeur au moins égale à la première valeur (90) prédéterminée, des actions opposées dite première action et deuxième action, pour révéler de la présence effective d'une variation d'amplitude (A) de valeur au moins égale à la première valeur (90) prédéterminée d'amplitude (A) d'une force extérieure (10) sur l'outil d'usinage (2).

24. Moyens selon l'une quelconque des revendications 15 à 23, **caractérisés en ce que** le deuxième ensemble fonctionnel (300) comprend au moins deux organes de détection (17) qui sont disposés en au moins deux points parmi trois points non alignés qui définissent un plan d'appui entre l'outil d'usinage (2) et la machine-outil (1).

25. Moyens selon l'une quelconque des revendications 15 à 24, **caractérisés en ce que** le deuxième ensemble fonctionnel (300) comprend :
- au moins un organe de détection (17), de type,
. comportant deux faces parallèles opposées, dont une première face (18) et une deuxième face (19), et
. délivrant un signal électrique (11) lorsqu'il est comprimé entre ces faces opposées (18, 19), et ce, selon une direction privilégiée, dite première direction de déformation (20), et ce, par des actions opposées (21, 22) dites première action (21) et deuxième action (22), chacune appliquée orthogonalement sur l'une desdites faces opposées (18, 19),
- au moins une zone (24) qui,
. présente deux surfaces parallèles opposées (25, 26), dite première surface (25) et deuxième surface (26), est élastiquement déformable par compression selon une direction privilégiée de déformation qui, dite deuxième direction de déformation (27), est sensiblement orthogonale auxdites première surface (25) et deuxième surface (26),
. est disposé entre l'outil d'usinage (2) et la partie réceptrice (100) de la machine-outil (1) de manière telle qu'il soit sollicité en compression lorsque l'outil d'usinage (2) reçoit une force extérieure (10),
. porte l'organe de détection (17) contre sa première surface (25), avec la première direction de déformation (20) de cet organe de détection (17) orientée parallèlement à la deuxième direction de déformation (27) de la zone (24) élastiquement déformable en compression, le dit organe de détection (17) étant bridé sur la zone (24) élastiquement déformable en compression au moyen d'un organe de bridage (29), et ce,
.. de façon à lui imposer une contrainte de compression d'une valeur prédéterminée, et
.. de manière telle que la compression de la zone (24) élastiquement déformable en compression sous l'effet d'une force extérieure (10) appliquée à l'outil d'usinage (2), réduise proportionnellement la valeur contrainte de compression imposée à l'organe de détection (17) et, par conséquent, modifie proportionnellement le signal électrique (11) généré par ledit organe de détection (17).

26. Moyens selon l'une quelconque des revendications 15 à 25, **caractérisés en ce que** le troisième ensemble fonctionnel (400) comprend des éléments fonctionnels en vue de prédéterminer la première valeur (90) d'amplitude (A) de la force extérieure (10) appliquée à l'outil d'usinage (2), et ce, au cours d'au moins une étape préparatoire, ces éléments fonctionnels permettant de mémoriser la valeur maximale de la variation d'amplitude (A) de cette force extérieure (10), lors d'au moins l'une des phases que sont :
- la deuxième phase opératoire (5), au cours de laquelle l'outil d'usinage (2) entre en contact avec la pièce à usiner (8) et reçoit une action dont l'amplitude (A) croît d'une valeur minimale à une valeur maximale, dite première valeur (90) prédéterminée, et
- la quatrième phase opératoire (7), au cours de laquelle l'outil d'usinage (2) achève une opération d'usinage de la pièce à usiner (8) et reçoit une action dont l'amplitude (A) décroît d'une valeur maximale, dite première valeur (90) prédéterminée, à une valeur minimale.

27. Machine-outil comprenant une pluralité de moyens d'entraînement à fonctionnement incrémental, ces moyens d'entraînement actionnant plusieurs organes mobiles de manière à réaliser une opération d'usinage sur une ébauche de pièce à usiner fixée à un porte-pièce de cette machine-outil, ladite machine-outil fonctionnant avec un programme de commande qui utilise des données numériques mémorisée dans une table des pas pour attribuer à chaque moyen d'entraînement une série d'ordres de déplacement incrémentaux se succédant en fonction d'une variable dépendant du temps, la séquence des ordres étant incluse dans la table des pas, ladite table des pas,
. étant établie à partir des résultats d'un calcul définissant la trajectoire d'usinage optimale en fonction du temps, et
. permettant d'obtenir un profil donné avec un matériau donné en tenant compte des caractéristiques de la machine-outil, cette machine-outil étant **caractérisée en ce qu'**elle comprend les moyens fonctionnels des revendications 15 à 26 pour mettre en oeuvre le procédé selon l'une quelconque des revendications 1 à 14.

## Claims

1. Method of detection of the state of a machining tool (2) used on a machine tool (1) which implements at least one such machining tool (2), during a machining process (3) comprising a plurality of operational phases (4, 5, 6, 7), to achieve at least one machining operation on a piece, referred to as piece to be machined (8),
said operational phases (4 to 7) consisting of at least the phases which are:
• a first operational phase (4), such as a phase of rapid advance, in the course of which the machining tool (2) is not in contact with the piece to be machined (8), and does not receive any action from said piece to be machined (8),
• a second operational phase (5), such as a phase of slow advance, in the course of which the machining tool (2) enters into contact with the piece to be machined (8), and receives an action, the amplitude (A) of which increases from a minimal value to a maximal value, referred to as first predetermined value (90),
• a third operational phase (6), such as a machining phase, in the course of which the machining tool (2) proceeds to an operation of machining of the piece to be machined (8), and receives an action, the average amplitude of which remains substantially constant,
• a fourth operational phase (7), such as a phase of end of machining, in the course of which the machining tool (2) accomplishes an operation of machining of the piece to be machined (8), and receives an action, the amplitude (A) of which decreases from a maximal value, referred to as first predetermined value (90), to a minimal value,
according to which method for detecting the state of the machining tool (2), the variations (9) in amplitude (A) of an external force (10) which is applied to this machining tool (2) are monitored, and the emergence of a variation in amplitude (A) of value is sought at least equal to the first predetermined value (90), and
a) if such a variation in amplitude (A) of value at least equal to the first predetermined value (90) is detected, it is verified whether, depending upon the operational phase of the machining process in which the machining tool (2) finds itself, it is possible that such a variation in amplitude (A) of value at least equal to the first predetermined value (90) in amplitude (A) of an external force (10) applied to the machining tool (2) can be produced, and
- in the case of a positive response, it is concluded that the machining tool (2) is in functioning state,
- in the case of a negative response, it is concluded that the machining tool (2) is out of order,
b) if such a variation in amplitude (A) of value at least equal to the first predetermined value (90) is not detected, it is verified whether, depending upon the operational phase of the machining process in which the machining tool (2) finds itself, it is possible that such a variation in amplitude (A) of value at least equal to the first predetermined value (90) of amplitude (A) of an external force (10) applied to the machining tool (2) is not produced, and
- in the case of a positive response, it is concluded that the machining tool (2) is in functioning state,
- in the case of a negative response, it is concluded that the machining tool (2) is out of order,
- this method also including the steps consisting of:
- providing at least one element, referred to as detecting element (17), making it possible:
• on the one hand, to collect at least one variation in amplitude (A) of value at least equal to the first predetermined value (90) of amplitude (A) of an external force (10) applied to the machining tool (2), and
• on the other hand, to generate an electrical signal (11) indicating the presence of this variation in amplitude (A) of value at least equal to the first predetermined value (90),
- inserting this detecting element (17) between the machine tool (1) and the machining tool (2) in such a way that it is subjected at least to variations in amplitude (A) of an external force (10) applied to the machining tool (2).

2. Method according to claim 1, **characterised in that** when the machining tool (2) is used to accomplish identical successive machinings, during a first predetermined number (N1) of these identical successive machinings, it comprises the steps according to which:
- the successive maximal values (VM) of variation in amplitude (A) of an external force (10) applied to the machining tool (2) are stored, and
- a weighted average of these successive maximal values (VM) is worked out,
- it is determined whether this weighted average has a noteworthy tendency to develop by a gradient, and in the case of positive response, it is determined whether the gradient in the development of the average exceeds a predetermined threshold value, in which case it is concluded that the machining tool (2) is worn out.

3. Method according to any one of the claims 1 or 2, **characterised in that,** when the machining tool (2) is used to accomplish the identical successive machinings, during a second predetermined number (N2) of these identical successive machinings, it comprises the steps according to which:
- the duration (D) of the path carried out by the machining tool (2) at a predetermined speed of movement is measured between
• a first predetermined point of the path of the machining tool (2) during the first operational phase (4), and
• a second point of the path of this machining tool (2) during the second operational phase (2), this second point being reached when it is detected that the machining tool (2) enters into contact with the piece to be machined (8), and
- the different durations measured are stored and these durations are compared with at least one predetermined reference value (DR) in order to determine, depending upon the speed of movement of the machining tool (2) between the first point and the second point, a thermal drift value of the second point relative to the first point,
- the determined value of the thermal drift is used to correct the positioning of the machining tool (2) in relation to the piece to be machined (8).

4. Method according to any one of the claims 1 to 3, **characterised in that** it comprises the steps consisting of:
- at least before starting the machining process (3), defining electrical data (40, 50, 60, 70) which characterise each of the operational phases (4 to 7) of the machining process (3), i.e. indications of phase (40, 50, 60, 70) characterising the first operational phase (4), the second operational phase (5), the third operational phase (6) and the fourth operational phase (7),
- while the machining process (3) is in course,
• detecting at least any variation in amplitude (A) of value at least equal to the first predetermined value (90) of variation in amplitude (A) of an external force (10) that is applied to the machining tool (2), producing at least one electrical signal (11) indicating the presence or the absence of this variation in amplitude (A) of value at least equal to the first predetermined value (90),
• determining which is that of the operational phases (4 to 7) of the machining process (3) which is engaged by using the indication of phase (40, 50, 60, 70) that **characterised** this operational phase, then, by using this indication of phase and the electrical signal (11) indicating the presence or the absence of the variation in amplitude (A) of value at least equal to the first predetermined value (90), considering the four following situations and for each of these situations working out data on the state of the machining tool (2), i.e.
a) for the situation of the first phase (4),
• in the absence of signal (11) showing a variation in amplitude (A) of value at least equal to the first predetermined value (90) of the external force (10), working out a first piece of information (12) indicating a possible state of functioning for the machining tool (2),
• in the presence of a signal (11) showing a variation in amplitude (A) of value at least equal to the first predetermined value (90) of the external force (10), working out a second piece of information (13) indicating a possible collision with the machining tool (2),
b) for the situation of the second phase (5),
• in the absence of signal (11) showing a variation in amplitude (A) of value at least equal to the first predetermined value (90) of the external force (10), working out a third piece of information (14) indicating that the machining tool (2) is out of order,
• in the presence of a signal (11) showing a variation in amplitude (A) of value at least equal to the first predetermined value (90) of the external force (10), working out a fourth piece of information (15) indicating the preparation under way of a machining operation,
c) for the situation of the third phase (6),
• in the absence of signal (11) showing a variation in amplitude (A) of value at least equal to the first predetermined value (90) of the external force (10), working out a fourth piece of information (15) indicating the preparation under way of a machining operation,
• in the presence of a signal showing a variation in amplitude (A) of predetermined value of the external force, working out a third piece of information (14) indicating that the machining tool (2) is out of order,
d) for the situation of the fourth phase (7),
• in the absence of signal (11) showing a variation in amplitude (A) of value at least equal to the first predetermined value (90) of the external force (10), working out a third piece of information (14) indicating that the machining tool (2) is out of order,
• in the presence of a signal (11) showing a variation in amplitude (A) of value at least equal to the first predetermined value (90) of the external force (10), working out a fifth piece of information (16) indicating that the machining tool (2) is carrying out a machining operation.

5. Method according to any one of the claims 1 to 4, **characterised in that** it comprises a step consisting in providing at least one detecting element (17), of type:
- having two parallel opposite faces, which are a first face (18) and a second face (19), and
- giving an electrical signal (11) when it is compressed between these opposite faces referred to as first face (18) and second face (19), in a preferential direction referred to as first direction of deformation (20), and this through opposite actions (21, 22), referred to as first (21) and second (22), each applied orthogonally on one of said opposite faces (18, 19).

6. Method according to claim 5, **characterised in that** it comprises a step according to which a detecting element (17) is provided consisting of at least one sensor of piezoelectric type.

7. Method according to any one of the claims 1 to 6, **characterised in that** it comprises a step consisting of disposing the detecting element (17) between the machining tool (2) and the machine tool (1), so that an external force (10) applied on the machining tool (2) leads to:
- the application of a first action (21), by the machining tool (2), on a first face (18) of the detecting element (17), and, by reaction,
- the application of a second action (22), by the machine tool (1), on a second face (19) of the detecting element (17),
the intensity of the first action (21) and the intensity of the second action (22) vary as a function of the intensity of the external force (10) applied to the machining tool (2),
this placement of the detecting element (17) being achieved in such a way that it produces an electrical signal (11) which reflects the variations in amplitude (A) of the first action (21) and of the second action (22) to which it is subjected.

8. Method according to claim 7, **characterised in that,** when the intensity of the first action (21) and the intensity of the second action (22) vary as a function
• on the one hand, of the external force (10) applied to the machining tool (2), and,
• on the other hand, of vibratory phenomena outside the machining tool (2),
the detecting element (17) producing an electrical signal (11) which reflects the variations in amplitude (A) of the first action (21) and of the second action (22) to which it is subjected, the method comprises steps consisting of:
- collecting the electrical signal (11) produced by the detecting element (17), and
- filtering this electrical signal (11) in such a way as to isolate from the rest of the signal a part (23) of this electrical signal (11) which shows a variation in amplitude (A) of value at least equal to the first predetermined value (90), of the actions referred to as first and second opposite actions (21, 22).

9. Method according to any one of the claims 1 to 8, **characterised in that** it comprises steps consisting of:
- implementing a plurality of detecting elements (17) and
- placing these detecting elements between the machining tool (2) and the machine tool (1),
- collecting the electrical signal (11) produced by each detecting element (17), and
- seeking in each electrical signal a part (23) of this electrical signal (11) which shows a variation in amplitude (A) of value at least equal to the first predetermined value (90), of the opposite actions referred to as first action and second action to which each detecting element (17) is subjected, and
- comparing at least certain of the different parts (23) of these electrical signals which each show a variation in amplitude (A) of value at least equal to the first predetermined value (90), of the opposite actions referred to as first action and second action, in order to ensure the effective presence of a variation in amplitude (A) of value at least equal to the first predetermined value (90) of amplitude (A) of an external force (10) on the machining tool (2).

10. Method according to any one of the claims 1 to 9, **characterised in that** it comprises steps according to which:
- at least two detecting elements (17) are provided, and in placing them
- one chooses at least two points amongst three non-aligned points which define a base plane between the machining tool (2) and the machine tool (1).

11. Method according to any one of the claims 1 to 10, **characterised in that** it comprises steps according to which, after at least one detecting element (17) is provided, of type
• having two parallel opposite faces, which are a first face (18) and a second face (19), and
• giving an electrical signal (11) when it is compressed between these opposite faces (18, 19), and this in a preferential direction referred to as first direction of deformation (20), and this through opposite actions (21, 22), referred to as first (21) and second action (22), each applied orthogonally on one of said opposite faces (18, 19),
in order to insert the detecting element (17) between the machine tool (1) and the machining tool (2) in such a way that this detecting element (17) is subjected to variations of an external force (9) applied to the machining tool (2):
- at least one zone (24) is formed which, having two parallel opposite surfaces (25, 26), referred to as first surface (25) and second surface (26), is elastically deformable by compression in a preferential direction of deformation which, referred to as second direction of deformation (27), is substantially orthogonal to said first surface (25) and second surface (26),
- the zone (24), elastically deformable in compression, is situated between the machining tool (2) and the receiving part (100) of the machine tool (1) in such a way that it is stressed in compression when the machining tool (2) receives an external force (10),
- the detecting element (17) is placed against a first surface (25) of the zone (24) elastically deformable in compression, with its first direction of deformation (20) aligned parallel to the second direction of deformation (27) of the zone (24) elastically deformable in compression,
- the detecting element (17) is restrained on the zone (24) elastically deformable in compression by means of a restraining element (29), and this
• in a way so as to impose on it a compressive stress of a predetermined value, and
• in such a way that the compression of the zone (24) elastically deformable in compression, under the effect of an external force (10) applied to the machining tool (2), reduces proportionally the compressive stress value given to the detecting element (17) and, as a consequence, modifies proportionally the electrical signal (11) generated by said detecting element (17).

12. Method according to any one of the claims 1 to 11, **characterised in that** it comprises the steps according to which:
- a first block (150) of rigid material is provided having at least two distinct faces (151, 152), which are a fourth (151) and a fifth face (152), and each zone (24) elastically deformable in compression is formed in such a way that they project on the fourth face (151) of said first block (150),
- the first block (150) is placed abutting on the receiving part (100) of the machine tool (1), and this by its fourth face (151) which includes at least one zone (24) elastically deformable in compression,
- the first block (150) is fixed on the receiving part (100) of the machine tool (1) by using at least one restraining element (29) used to restrain a detecting element (17) on the zone (24) elastically deformable in compression which is associated with it,
- the machining tool (2) is fixed at least directly on the fifth face (152) of the first block (150).

13. Method according to claim 12, **characterised in that,** to fix the machining tool (2) on the first block (150), a second block (160) of rigid material is provided on which the machining tool (2) is fixed beforehand, and it is said second block (160) that is fixed on the fifth face (152) of said first block (150).

14. Method according to any one of the claims 1 to 13, **characterised in that,** to predetermine the first value (90) of amplitude (A) of the external force (10) applied to the machining tool (2), the method comprises at least one preparatory step in the course of which the maximal value is stored of the variation in amplitude (A) of this external force (10), during at least one of the phases which are:
- the second operational phase (5), in the course of which the machining tool (2) enters into contact with the piece to be machined (8) and receives an action, the amplitude (A) of which increases from a minimal value to a maximal value, referred to as first predetermined value (90), and
- the fourth operational phase (7), in the course of which the machining tool (2) accomplishes a machining operation on the piece to be machined (8) and receives an action, the amplitude (A) of which decreases from a maximal value, referred to as first predetermined value (90), to a minimal value.

15. Means for implementing the method according to any one of the claims 1 to 14, consisting of:
- a second functional assembly (300) making it possible, while the machining process (3) is under way,
• to monitor the variations (9) in amplitude (A) of an external force (10) that is applied to this machining tool (2), and
• to seek the occurrence of a variation in amplitude (A) of value at least equal to the first predetermined value (90), and
• to detect at least the variation in amplitude (A) of value at least equal to the first predetermined value (90) of amplitude (A) of an external force (10) which is applied to the machining tool (2),
- a third functional assembly (400) making it possible,
a) if such a variation in amplitude (A) of value at least equal to the first predetermined value (90) is detected, to verify whether, depending upon the operational phase of the machining process in which the machining tool (2) finds itself, it is possible that such a variation in amplitude (A) of value at least equal to the first predetermined value (90) of amplitude (A) of an external force (10) applied to the machining tool (2) can be produced, and
- in the case of a positive response, to conclude that the machining tool (2) is in functioning state,
- in the case of a negative response, to conclude that the machining tool (2) is out of order,
b) if such a variation in amplitude (A) of value at least equal to the first predetermined value (90) is not detected, to verify whether, depending upon the operational phase of the machining process in which the machining tool (2) finds itself, it is possible that such a variation in amplitude (A) of value at least equal to the first predetermined value (90) of amplitude (A) of an external force (10) applied to the machining tool (2) is not produced, and
- in the case of a positive response, to conclude that the machining tool (2) is in functioning state,
- in the case of a negative response, to conclude that the machining tool (2) is out of order,
these means being **characterised in that** the second functional assembly (300) comprises at least one element, referred to as detecting element (17), making it possible:
• on the one hand, to collect at least one variation in amplitude (A) of value at least equal to the first predetermined value (90) of amplitude (A) of an external force (10) applied to the machining tool (2), and
• on the other hand, to generate an electrical signal (11) showing the presence of this variation in amplitude (A) of value at least equal to the first predetermined value (90).

16. Means according to claim 15, **characterised in that** the second functional assembly (300) comprises at least one element, referred to as detecting element (17), making it possible:
• on the one hand, to collect at least one variation in amplitude (A) of value at least equal to the second predetermined value (91) of amplitude (A) of an external force applied to the tool, this second value (91) being less than said first value (90), and
• on the other hand, to generate an electrical signal (11) showing the presence of this variation in amplitude (A) of value at least equal to the second predetermined value (91).

17. Means according to claim 15, **characterised in that** the third functional assembly (400) is of type making it possible to use the presence or absence of a variation in amplitude (A) of value at least equal to the second predetermined value (91) in order to establish, when such a second value (91) of variation in amplitude (A) of the external force (10) is detected, that the machining tool (2) is out of order, owing to wear and tear.

18. Means according to any one of the claims 15 to 17, **characterised in that** the third functional assembly (400) comprises functional elements which make it possible, when the machining tool (2) is used to accomplish identical successive machinings, during a first predetermined number (N1) of these identical successive machinings:
- to store the successive maximal values (VM) in variation of amplitude (A) of an external force (10) applied to the machining tool (2),
- to work out a weighted average of these successive maximal values (VM),
- to determine whether this weighted average has a noteworthy tendency to develop by a gradient, and in the case of positive response, to determine whether the gradient in the development of the average exceeds a predetermined threshold value, in which case to conclude that the machining tool (2) is worn out.

19. Means according to any one of the claims 15 to 18, **characterised in that** the third functional assembly (400) comprises functional elements which, when the machining tool (2) is used to accomplish identical successive machinings, make it possible, during a second predetermined number (N2) of these identical successive machinings:
- to measure the duration of the path carried out by the machining tool (2), at a predetermined speed, between
• a first predetermined point on the path of the machining tool (2) during the first operational phase (4), and
• a second point on the path of this machining tool (2) during the second operational phase (2), this second point being reached when entry into contact of the machining tool (2) and the piece to be machined (8) is detected, and
- to store the different measured durations and to compare these durations with at least one predetermined reference value (DR) in order to determine, as a function of the speed of movement of the machining tool (2) between the first point and the second point, a value of thermal drift of the second point relative to the first point,
- to use the determined value of the thermal drift to correct the positioning of the machining tool (2) in relation to the piece to be machined (8).

20. Means according to any one of the claims 15 to 17, **characterised in that** they consist of:
- a second functional assembly (300) making it possible, when the machining process (3) is in the course of detecting at least any variation in amplitude A of value at least equal to the first predetermined value (90) of variation of amplitude (A) of an external force (10) that is applied to the machining tool (2), to produce at least one electrical signal (11) showing the presence or absence of this variation in amplitude (A) of value at least equal to the first predetermined value (90),
- a third functional assembly (400) making it possible to use, on the one hand, one of the electrical indications (40, 50, 60, 70) characterising one of the operational phases (4 to 7) to recognize which is that of the operational phases (4 to 7) of the machining process that is being engaged, and, on the other hand, the electrical signal (11) showing the presence or absence of the variation in amplitude (A) of value at least equal to the first predetermined value (90), in order to consider the following four situations, and, for each of these situations, to work out data on the state of the machining tool (2), i.e.
a) for the situation of the first phase (4),
• in the absence of signal (11) showing a variation in amplitude (A) of value at least equal to the first predetermined value (90) of the exterior force (10), to work out a first piece of information (12) indicating a possible state of functioning for the machining tool (2),
• in the presence of a signal (11) showing a variation in amplitude (A) of value at least equal to the first predetermined value (90) of the external force (10), to work out a second piece of information (13) indicating a possible collision with the machining tool (2),
b) for the situation of the second phase (5),
• in the absence of signal (11) showing a variation in amplitude (A) of value at least equal to the first predetermined value (90) of the external force (10), to work out a third piece of information (14) indicating that the machining tool (2) is out of order,
• in the presence of a signal (11) showing a variation in amplitude (A) of value at least equal to the first predetermined value (90) of the external force (10), to work out a fourth piece of information (15) indicating the preparation under way of a machining operation,
c) for the situation of the third phase (6),
• in the absence of signal (11) showing a variation in amplitude (A) of value at least equal to the first predetermined value (90) of the external force (10), to work out a fourth piece of information (15) indicating the preparation under way of a machining operation,
• in the presence of a signal showing a variation in amplitude (A) of predetermined value of the external force, to work out a third piece of information (14) indicating that the machining tool (2) is out of order,
d) for the situation of the fourth phase (7),
• in the absence of signal (11) showing a variation in amplitude (A) of value at least equal to the first predetermined value (90) of the external force (10), to work out a third piece of information (14) indicating that the machining tool (2) is out of order,
• in the presence of a signal (11) showing a variation in amplitude (A) of value at least equal to the first predetermined value (90) of the external force (10), to work out a fifth piece of information (16) indicating that the machining tool (2) is accomplishing a machining operation.

21. Means according to any one of the claims 15 to 20, **characterised in that** the second functional assembly (300) comprises at least one detecting element (17), of type:
- having two parallel opposite faces, which are a first face (18) and a second face (19), and
- giving an electrical signal (11) when it is compressed between these opposite faces referred to as first face (18) and second face (19), in a preferential direction referred to as first direction of deformation (20), and this through opposite actions (21, 22), referred to as first (21) and second (22), each applied orthogonally on one of said opposite faces (18, 19).

22. Means according to any one of the claims 15 to 21, **characterised in that** the third functional assembly (400) comprises a first functional stage (500) making it possible to collect the electrical signal (11) produced by the detecting element (17), and when the intensity of the first action (21) and the intensity of the second action (22) vary as a function,
• on the one hand, of the external force (10) applied to the machining tool (2), and,
• on the other hand, of vibratory phenomena (not shown) outside the machining tool (2):
- to filter this electrical signal (11) in such a way as to isolate a part of this electrical signal (11) which shows a variation in amplitude (A) of value at least equal to the first predetermined value (90), of the actions referred to as first and second opposite actions (21, 22).

23. Means according to any one of the claims 15 to 22, **characterised in that** the third functional assembly (400) comprises a second functional stage (600) making it possible:
- to collect a plurality of electrical signals (11) produced by a plurality of detecting elements (17), and
- to seek in each electrical signal a part (23) of this electrical signal (11) which shows a variation in amplitude (A) of value at least equal to the first predetermined value (90), of opposite actions referred to as first action and second action to which each detecting element (17) is subjected, and
- to compare at least certain of the different parts (23) of these electrical signals which each show a variation in amplitude (A) of value at least equal to the first predetermined value (90), of opposite actions referred to as first action and second action, to indicate the effective presence of a variation in amplitude (A) of value at least equal to the first predetermined value (90) of amplitude (A) of an external force (10) on the machining tool (2).

24. Means according to any one of the claims 15 to 23, **characterised in that** the second functional assembly (300) comprises at least two detecting elements (17) which are disposed on at least two points amongst three non-aligned points that define a base plane between the machining tool (2) and the machine tool (1).

25. Means according to any one of the claims 15 to 24, **characterised in that** the second functional assembly (300) comprises:
- at least one detecting element (17), of type
• having two parallel opposite faces, which are a first face (18) and a second face (19), and
• giving an electrical signal (11) when it is compressed between these opposite faces (18, 19), and this in a preferential direction, referred to as first direction of deformation (20), and this through opposite actions (21, 22), referred to as first action (21) and second action (22), each applied orthogonally on one of said opposite faces (18, 19),
- at least one zone (24) which
• has two parallel opposite surfaces (25, 26), referred to as first surface (25) and second surface (26), is elastically deformable by compression in a preferential direction of deformation, which, referred to as second direction of deformation (27), is substantially orthogonal to said first surface (25) and second surface (26),
• is disposed between the machining tool (2) and the receiving part (100) of the machine tool (1) in such a way that it is stressed in compression when the machining tool (2) receives an external force (10),
• bears the detecting element (17) against its first surface (25), with the first direction of deformation (20) of this detecting element (17) aligned parallel to the second direction of deformation (27) of the zone (24) elastically deformable in compression, said detecting element (17) being restrained on the zone (24) elastically deformable in compression by means of a restraining element (29), and this
•• in a manner so as to impose on it a compression restraint of a predetermined value, and
•• in a way such that the compression of the zone (24) elastically deformable in compression, under the effect of an external force (10) applied to the machining tool (2), reduces proportionally the stress value of compression imposed on the detecting element (17), and, as a consequence, modifies proportionally the electrical signal (11) generated by said detecting element (17).

26. Means according to any one of the claims 15 to 25, **characterised in that** the third functional assembly (400) comprises functional elements for the purpose of predetermining the first value (90) of amplitude (A) of the external force (10) applied to the machining tool (2), and this in the course of at least one preparatory step, these functional elements making it possible to store the maximal value of the variation in amplitude (A) of this external force (10), during at least one of the phases which are:
- the second operational phase (5), in the course of which the machining tool (2) enters into contact with the piece to be machined (8) and receives an action, the amplitude (A) of which increases from a minimal value to a maximal value, referred to as first predetermined value (90), and
- the fourth operational phase (7), in the course of which the machining tool (2) accomplishes a machining operation of the piece to be machined (8) and receives an action, the amplitude (A) of which decreases from a maximal value, referred to as first predetermined value (90), to a minimal value.

27. Machine tool comprising a plurality of incrementally operating drive means, these drive means putting into action a plurality of mobile elements in such a way as to achieve a machining operation on a blank to be machined fixed to a work holder of this machine tool, said machine tool operating with a control program that uses digital data stored in a table of steps to assign to each drive means a series of incremental displacement commands following one another as a function of a time-dependent variable, the sequence of commands being included in the table of steps, said table of steps
• being established starting from the results of a calculation defining the optimal machining path as a function of time, and
• making it possible to obtain a given profile with a given material taking into account features of the machine tool, this machine tool being **characterised in that** it comprises the functional means of claims 15 to 26 for implementing the method according to any one of the claims 1 to 14.

## Patentansprüche

1. Verfahren zur Erkennung des Zustands eines Bearbeitungswerkzeugs (2), das auf einer Werkzeugmaschine eingesetzt wird, die mindestens ein solches Bearbeitungswerkzeug (2) benutzt, um bei einem mehrere Schritte (4, 5, 6, 7) umfassenden Bearbeitungsvorgang (3) mindestens einen Bearbeitungsgang an einem als Werkstück (8) bezeichneten Teil auszuführen
wobei die genannten Arbeitsschritte (4 bis 7) mindestens in folgenden Schritten bestehen:
. einem ersten Arbeitsschritt (4), wie einem Schritt der schnellen Zustellung, bei dem das Bearbeitungswerkzeug (2) das Werkstück (8) nicht berührt und keinerlei Wirkung von dem genannten Werkstück (8) auf Ersteres ausgeübt wird,
. einem zweiten Arbeitsschritt (5), wie einem Schritt der langsamen Zustellung, bei dem das Bearbeitungswerkzeug (2) das Werkstück (8) berührt, und eine Wirkung auf Ersteres ausgeübt wird, deren Amplitude (A) von einem minimalen Wert auf einen maximalen Wert ansteigt, der als erster vorgegebener Wert (90) bezeichnet wird,
. einem dritten Arbeitsschritt (6), wie dem Schritt der Bearbeitung, bei dem das Bearbeitungswerkzeug (2) einen Bearbeitungsgang am Werkstück (8) ausführt und eine Wirkung auf Ersteres ausgeübt wird, deren durchschnittliche Amplitude im Wesentlichen konstant bleibt,
. einem vierten Arbeitsschritt (7), wie dem Schritt des Bearbeitungsendes, bei dem das Bearbeitungswerkzeug (2) den Bearbeitungsgang des Werkstücks (8) beendet und eine Wirkung auf Ersteres ausgeübt wird, deren Amplitude (A) von einem maximalen, als erster vorgegebener Wert (90) bezeichneten Wert auf einen minimalen Wert sinkt,
wobei man nach diesem Verfahren zur Erkennung des Zustands eines Bearbeitungswerkzeugs (2), die Schwankungen (9) der Amplitude (A) einer äußeren Kraft (10), mit der dieses Bearbeitungswerkzeug (2) beaufschlagt wird, überwacht, und man nach dem Auftreten einer Amplitudenschwankung (A) mit einem Wert sucht, der mindestens dem ersten vorgegebenen Wert (90) entspricht, und man
a) wenn ein solche Amplitudenschwankung (A) mit einem Wert, der mindestens dem ersten vorgegebenen Wert (90) entspricht, erkannt wird, überprüft, ob es entsprechend dem Arbeitsschritt des Bearbeitungsvorgangs, in dem sich das Bearbeitungswerkzeug (2) befindet, möglich ist, dass eine solche Amplitudenschwankung (A), mit einem Wert, der mindestens dem ersten vorgegebenen Wert (90) der Amplitude (A) einer äußeren Kraft (10) entspricht, mit der dieses Bearbeitungswerkzeug (2) beaufschlagt wird, auftreten kann, und man
- im Fall einer positiven Antwort daraus schließt, dass sich das Bearbeitungswerkzeug (2) in betriebsbereitem Zustand befindet,
- im Fall einer negativen Antwort daraus schließt, dass das Bearbeitungswerkzeug (2) unbrauchbar ist,
b) wenn ein solche Amplitudenschwankung (A) mit einem Wert, der mindestens dem ersten vorgegebenen Wert (90) entspricht, nicht erkannt wird, überprüft, ob es entsprechend dem Arbeitsschritt des Bearbeitungsvorgangs, in dem sich das Bearbeitungswerkzeug (2) befindet, möglich ist, dass eine solche Amplitudenschwankung (A), mit einem Wert, der mindestens dem ersten vorgegebenen Wert (90) der Amplitude (A) einer äußeren Kraft (10) entspricht, mit der dieses Bearbeitungswerkzeug (2) beaufschlagt wird, nicht auftreten kann, und man
- im Fall einer positiven Antwort daraus schließt, dass sich das Bearbeitungswerkzeug (2) in betriebsbereitem Zustand befindet,
- im Fall einer negativen Antwort daraus schließt, dass das Bearbeitungswerkzeug (2) unbrauchbar ist,
- wobei dieses Verfahren ebenfalls Schritte aufweist, die darin bestehen:
- ein Organ vorzusehen, das als Erkennungsorgan (17) bezeichnet wird, und das es gestattet:
. einerseits mindestens eine Amplitudenschwankung (A), mit einem Wert aufzunehmen, der mindestens dem ersten vorgegebenen Wert (90) der Amplitude (A) einer äußeren Kraft (10) entspricht, mit der das Bearbeitungswerkzeug (2) beaufschlagt wird, und
. andererseits ein elektrisches Signal (11) zu erzeugen, welches das Vorhandensein dieser Amplitudenschwankung (A) mit einem Wert meldet, der mindestens dem ersten vorgegebenen Wert (90) entspricht,
- dieses Erkennungsorgan (17) so zwischen der Werkzeugmaschine (1) und dem Bearbeitungswerkzeug (2) anzuordnen, dass es zumindest von den Amplitudenschwankungen (A) einer äußeren Kraft (10) belastet wird, mit der das Bearbeitungswerkzeug (2) beaufschlagt wird.

2. Verfahren nach Anspruch 1, **dadurch gekennzeichnet, dass** es, wenn das Bearbeitungswerkzeug (2) zur Ausführung aufeinander folgender, identischer Bearbeitungen im Verlauf einer ersten vorgegebenen Anzahl (N1) dieser identischen, aufeinander folgenden Bearbeitungen benutzt wird, Schritte umfasst, in denen:
- man die aufeinander folgenden, maximalen Werte (VM) der Amplitudenschwankungen (A) einer äußeren Kraft (10) speichert, mit der das Bearbeitungswerkzeug (2) beaufschlagt wird, und
- man ein gewichtetes Mittel dieser aufeinander folgenden, maximalen Werte (VM) berechnet,
- man ermittelt, ob dieses gewichtete Mittel eine merkliche Entwicklungstendenz zu einem Anstieg aufweist, und man im Fall einer positiven Antwort ermittelt, ob der Anstieg der Entwicklung des Mittelwertes einen vorgegebenen Grenzwert überschreitet, und man, wenn ja, daraus schließt, dass das Bearbeitungswerkzeug (2) verschlissen ist.

3. Verfahren nach einem der Ansprüche 1 oder 2, **dadurch gekennzeichnet, dass,** wenn das Bearbeitungswerkzeug (2) zur Ausführung aufeinander folgender, identischer Bearbeitungen im Verlauf einer zweiten vorgegebenen Anzahl (N2) dieser identischen, aufeinander folgenden Bearbeitungen benutzt wird, Schritte umfasst, in denen:
- man die Dauer (D) des vom Bearbeitungswerkzeug (2) mit einer vorgegebenen Geschwindigkeit zurückgelegten Wegs zwischen
. einem ersten vorgegebenen Punkt der Bahn des Bearbeitungswerkzeugs (2) während des ersten Arbeitschrittes (4) und
. einem zweiten Punkt der Bahn dieses Bearbeitungswerkzeugs (2) während des zweiten Arbeitschrittes (2) misst, wobei dieser zweite Punkt erreicht ist, wenn man erkennt, dass das Bearbeitungswerkzeug (2) das Werkstück (8) berührt, und
- man die verschiedenen gemessenen Werte der Dauer speichert und diese Werte der Dauer mit mindestens einem vorgegebenen Referenzwert (DR) vergleicht, um entsprechend der Verfahrgeschwindigkeit des Bearbeitungswerkzeugs (2) zwischen dem ersten und dem zweiten Punkt einen Wert der thermischen Drift des zweiten Punktes zum ersten Punkt zu ermitteln,
- man den ermittelten Wert der thermischen Drift auswertet, um die Positionierung des Bearbeitungswerkzeugs (2) zum Werkstück (8) zu korrigieren.

4. Verfahren nach einem der Ansprüche 1 bis 3, **dadurch gekennzeichnet, dass** es Schritte aufweist, die darin bestehen, dass:
- zumindest vor dem Start des Bearbeitungsvorgangs (3) die elektrischen Angaben (40, 50, 60, 70) festgelegt werden, welche jeden der Arbeitsschritte (4 bis 7) des Bearbeitungsvorgangs (3) kennzeichnen, das heißt, die den ersten Arbeitsschritt (4), den zweiten Arbeitsschritt (5), den dritten Arbeitsschritt (6) und den vierten Arbeitsschritt (7) kennzeichnenden Angaben (40, 50, 60, 70),
- während der Bearbeitungsvorgang (3) läuft,
. mindestens alle Amplitudenschwankungen (A) mit einem Wert erkannt werden, der mindestens dem ersten vorgegebenen Wert (90) der Amplitudenschwankung (A) einer äußeren Kraft (10) entspricht, mit der das Bearbeitungswerkzeug (2) beaufschlagt wird, mindestens ein elektrisches Signal (11) erzeugt wird, welches das Vorhandensein oder das Ausbleiben dieser Amplitudenschwankung (A) mit einem Wert meldet, der mindestens dem ersten vorgegebenen Wert (90) entspricht,
- ermittelt wird, welcher der Arbeitsschritte (4 bis 7) des Bearbeitungsvorgangs (3) begonnen hat, indem die Angabe des Schrittes (40, 50, 60, 70) benutzt wird, welche diesen Arbeitsschritt kennzeichnet, und dann diese Schrittangabe und das elektrische Signal (11) ausgewertet werden, welches das Vorhandensein oder das Ausbleiben der Amplitudenschwankung (A) mit einem Wert meldet, der mindestens dem ersten vorgegebenen Wert (90) entspricht, die vier folgenden Situationen berücksichtigt werden und für jede dieser Situationen Informationen über den Zustand des Bearbeitungswerkzeugs (2) erstellt werden, das heißt,
a) für die Situation des ersten Schrittes (4),
. bei Ausbleiben eines Signals (11), welches eine Amplitudenschwankung (A) mit einem Wert meldet, der mindestens dem ersten vorgegebenen Wert (90) der äußeren Kraft (10) entspricht, Erstellen einer ersten Information (12), die den Zustand des möglichen Betriebs für das Bearbeitungswerkzeug (2) angibt,
. bei Vorhandensein eines Signals (11), welches eine Amplitudenschwankung (A) mit einem Wert meldet, der mindestens dem ersten vorgegebenen Wert (90) der äußeren Kraft (10) entspricht, Erstellen einer zweiten Information (13), die eine mögliche Kollision mit dem Bearbeitungswerkzeug (2) angibt,
b) für die Situation des zweiten Schrittes (5),
. bei Ausbleiben eines Signals (11), welches eine Amplitudenschwankung (A) mit einem Wert meldet, der mindestens dem ersten vorgegebenen Wert (90) der äußeren Kraft (10) entspricht, Erstellen einer dritten Information (14), die angibt, dass das Bearbeitungswerkzeug (2) unbrauchbar ist,
. bei Vorhandensein eines Signals (11), welches eine Amplitudenschwankung (A) mit einem Wert meldet, der mindestens dem ersten vorgegebenen Wert (90) der äußeren Kraft (10) entspricht, Erstellen einer vierten Information (15), welche die laufende Ausführung eines Bearbeitungsgangs angibt,
c) für die Situation des dritten Schrittes (6),
. bei Ausbleiben eines Signals (11), welches eine Amplitudenschwankung (A) mit einem Wert meldet, der mindestens dem ersten vorgegebenen Wert (90) der äußeren Kraft (10) entspricht, Erstellen einer vierten Information (15), welche die laufende Ausführung eines Bearbeitungsgangs angibt,
. bei Vorhandensein eines Signals (11), welches die Amplitudenschwankung (A) mit einem vorgegebenen Wert der äußeren Kraft meldet, Erstellen einer dritten Information (14), die angibt, dass das Bearbeitungswerkzeug (2) unbrauchbar ist,
d) für die Situation des vierten Schrittes (7),
. bei Ausbleiben eines Signals (11), welches eine Amplitudenschwankung (A) mit einem Wert meldet, der mindestens dem ersten vorgegebenen Wert (90) der äußeren Kraft (10) entspricht, Erstellen einer dritten Information (14), die angibt, dass das Bearbeitungswerkzeug (2) unbrauchbar ist,
. bei Vorhandensein eines Signals (11), welches einer Amplitudenschwankung (A) mit einem Wert meldet, der mindestens dem ersten vorgegebenen Wert (90) der äußeren Kraft (10) entspricht, Erstellen einer fünften Information (16), die angibt, dass das Bearbeitungswerkzeug (2) einen Bearbeitungsgang abschließt.

5. Verfahren nach einem der Ansprüche 1 bis 4, **dadurch gekennzeichnet, dass** es einen Schritt umfasst, der darin besteht, mindestens ein Erkennungsorgan (17) von einem Typ vorzusehen:
- der zwei sich gegenüberliegende parallele Flächen aufweist, darunter eine erste Fläche (18) und eine zweite Fläche (19), und
- der ein elektrisches Signal (11) ausgibt, wenn er zwischen diesen beiden, sich gegenüberliegenden, als erste Fläche (18) und als zweite Fläche (19) bezeichneten Flächen, in eine als erste Verformungsrichtung (20) bezeichnete, bevorzugte Richtung zusammengedrückt wird, und dies durch die als erste (21) und zweite (22) bezeichneten, entgegengesetzten Einwirkungen (21, 22), mit denen jeweils eine der sich gegenüberliegenden Flächen (18, 19) senkrecht beaufschlagt wird.

6. Verfahren nach Anspruch 5, **dadurch gekennzeichnet, dass** es einen Schritt umfasst, der darin besteht, ein Erkennungsorgan (17) vorzusehen, das mindestens aus einem piezoelektrischen Aufnehmer besteht.

7. Verfahren nach einem der Ansprüche 1 bis 6, **dadurch gekennzeichnet, dass** es einen Arbeitsschritt umfasst, der darin besteht, das Erkennungsorgan (17) zwischen dem Bearbeitungswerkzeug (2) und der Werkzeugmaschine (1) anzuordnen, damit eine äußeren Kraft (10), mit der das Bearbeitungswerkzeug (2) beaufschlagt wird, zu Folgendem führt:
- zur Beaufschlagung einer ersten Einwirkung (21) durch das Bearbeitungswerkzeug (2) auf eine erste Fläche (18) des Erkennungsorgans (17) und aufgrund der Reaktion
- zur Beaufschlagung einer zweiten Einwirkung (22) durch die Werkzeugmaschine (1) auf eine zweite Fläche (19) des Erkennungsorgans (17),
wobei die Stärke der ersten Einwirkung (21) und die Stärke der zweiten Einwirkung (22) entsprechend der Stärke der äußeren Kraft (10) schwanken, mit der das Bearbeitungswerkzeug (2) beaufschlagt wird,
wobei diese Anordnung des Erkennungsorgans (17) so erfolgt, dass es ein elektrisches Signal (11) erzeugt, das die Amplitudenschwankungen (A) der ersten Einwirkung (21) und der zweiten Einwirkung (22) wiedergibt, mit denen es belastet wird.

8. Verfahren nach Anspruch 7, **dadurch gekennzeichnet, dass,** wenn die Stärke der ersten Einwirkung (21) und die Stärke der zweiten Einwirkung (22) in Abhängigkeit
. einerseits von der äußeren Kraft (10), mit der das Bearbeitungswerkzeug (2) beaufschlagt wird, und
. andererseits von das Bearbeitungswerkzeug (2) nicht betreffenden Schwingungsphänomenen schwankt,
und das Erkennungsorgan (17) ein elektrisches Signal (11) erzeugt, das die Amplitudenschwankungen (A) der ersten Einwirkung (21) und der zweiten Einwirkung (22) wiedergibt, mit den es belastet wird, das Verfahren Schritte umfasst, die darin bestehen:
- das vom Erkennungsorgan (17) erzeugte elektrische Signal (11) aufzunehmen und
- dieses elektrische Signal (11) so zu filtern, dass vom restlichen Signal ein Teil (23) dieses elektrischen Signals (11) getrennt wird, der eine Amplitudenschwankung (A) der als sogenannte erste und zweite Einwirkung bezeichneten, entgegengesetzten Einwirkungen (21, 22) mit einem Wert meldet, der mindestens dem ersten vorgegebenen Wert (90) entspricht.

9. Verfahren nach einem der Ansprüche 1 bis 6, **dadurch gekennzeichnet, dass** es Schritte umfasst, die darin bestehen:
- mehrere Erkennungsorgane (17) einzusetzen und
- diese Erkennungsorgane zwischen dem Bearbeitungswerkzeug (2) und der Werkzeugmaschine (1) anzuordnen,
- das von jedem Erkennungsorgan (17) erzeugte elektrische Signal (11) aufzunehmen und
- in jedem elektrischen Signal (11) nach einem Teil (23) dieses elektrischen Signals (11) zu suchen, der eine Amplitudenschwankung (A) der als sogenannte erste und zweite Einwirkung bezeichneten, entgegengesetzten Einwirkungen, mit denen jedes Erkennungsorgan (17) belastet wird, mit einem Wert meldet, der mindestens dem ersten vorgegebenen Wert (90) entspricht, und
- mindestens einige der unterschiedlichen Teile (23) dieser elektrischen Signale zu vergleichen, die jeweils eine Amplitudenschwankung (A) der als sogenannte erste und zweite Einwirkung bezeichneten, entgegengesetzten Einwirkungen mit einem Wert melden, der mindestens dem ersten vorgegebenen Wert (90) entspricht, um das tatsächliche Vorhandensein einer Amplitudenschwankung (A) mit einem Wert zu gewährleisten, der mindestens dem ersten vorgegebenen Wert (90) der Amplitude (A) einer äußeren Kraft (10) am Bearbeitungswerkzeug (2) entspricht.

10. Verfahren nach einem der Ansprüche 1 bis 9, **dadurch gekennzeichnet, dass** es Schritte umfasst, in denen:
- man mindestens zwei Erkennungsorgane (17) vorsieht, und
- man für ihre Anordnung unter drei nicht auf einer Linie liegenden Punkten mindestens zwei Punkte auswählt, die eine Auflagefläche zwischen dem Bearbeitungswerkzeug (2) und der Werkzeugmaschine (1) begrenzen.

11. Verfahren nach einem der Ansprüche 1 bis 10, **dadurch gekennzeichnet, dass** es Schritte umfasst, in denen, nachdem man mindestens ein Erkennungsorgan (17) von einem Typ,
. der zwei sich gegenüberliegende parallele Flächen aufweist, darunter eine erste Fläche (18) und eine zweite Fläche (19), und
. der ein elektrisches Signal (11) ausgibt, wenn er zwischen diesen beiden, sich gegenüberliegenden Flächen (18, 19), in eine als erste Verformungsrichtung (20) bezeichnete, bevorzugte Richtung zusammengedrückt wird, und dies durch die als erste (21) und zweite (22) bezeichneten, entgegengesetzten Einwirkungen (21, 22), mit denen jeweils eine der sich gegenüberliegenden Flächen (18, 19) senkrecht beaufschlagt wird,
vorgesehen hat, man, um das Erkennungsorgan (17) zwischen der Werkzeugmaschine (1) und dem Bearbeitungswerkzeug (2) anzuordnen, so dass dieses Erkennungsorgan (17) mit den Schwankungen einer äußeren Kraft (9) belastet wird, mit der das Bearbeitungswerkzeug (2) beaufschlagt wird:
- mindestens einen Bereich (24) bildet, der, indem er zwei, als erste Fläche (25) und als zweite Fläche (26) bezeichnete, sich gegenüberliegende parallele Flächen (25, 26) aufweist, unter Druck in eine als zweite Verformungsrichtung (27) bezeichnete, bevorzugte Verformungsrichtung elastisch verformbar ist, welche im Wesentlichen senkrecht zur genannten ersten Fläche (25) und zweiten Fläche (26) ist,
- man einen unter Druck elastisch verformbaren Bereich (24) so zwischen das Bearbeitungswerkzeug (2) und den Aufnahmeteil (100) der Werkzeugmaschine (1) platziert, dass er mit Druck belastet wird, wenn das Bearbeitungswerkzeug (2) mit einer äußeren Kraft (10) beaufschlagt wird,
- man das Erkennungsorgan (17) gegen eine erste Fläche (25) des unter Druck elastisch verformbaren Bereiches (24) mit seiner ersten Verformungsrichtung (20) parallel zur zweiten Verformungsrichtung (27) des unter Druck elastisch verformbaren Bereiches (24) ausgerichtet, platziert,
- man ein Erkennungsorgan (17) mittels eines Spannorgans (29) auf den unter Druck elastisch verformbaren Bereiches (24) aufspannt, und dies
. derart, dass es mit einer Druckspannung eines vorgegebenen Wertes belastet wird,
. so dass der Druck des unter Druck elastisch verformbaren Bereiches (24) unter Einwirkung einer äußeren Kraft (10), mit der das Bearbeitungswerkzeug (2) beaufschlagt wird, den Wert der Druckspannung, mit dem das Erkennungsorgan (17) belastet wird, proportional verringert und folglich das vom genannten Erkennungsorgan (17) erzeugte elektrische Signal (11) proportional verändert.

12. Verfahren nach einem der Ansprüche 1 bis 11, **dadurch gekennzeichnet, dass** es folgende Schritte umfasst, in denen:
- man einen ersten Block (150) aus starrem Material vorsieht, der mindestens zwei unterschiedliche Flächen (151, 152) aufweist, darunter eine vierte (151) und eine fünfte Fläche (152), und man jeden unter Druck elastisch verformbaren Bereich (24) so ausbildet, das er über die vierte Fläche (151) des genannten Blocks (150) übersteht,
- man den ersten Block (150) auf der Aufnahmefläche (100) der Werkzeugmaschine (1) aufliegend platziert, und dies mit seiner vierten Fläche (151), die mindestens einen unter Druck elastisch verformbaren Bereich (24) aufweist,
- man den ersten Block (150) auf der Aufnahmefläche (100) der Werkzeugmaschine (1) befestigt, indem man sich mindestens eines Spannorgans (29) bedient, dass verwendet wird, um ein Erkennungsorgan (17) auf dem ihm zugehörigen, unter Druck elastisch verformbaren Bereich (24) aufzuspannen,
- man mindestens direkt das Bearbeitungswerkzeug (2) auf der fünften Fläche (152) des ersten Blocks (150) befestigt.

13. Verfahren nach Anspruch 12, **dadurch gekennzeichnet, dass** man zur Befestigung des Bearbeitungswerkzeugs (2) auf dem ersten Block (150) einen zweiten Block (160) aus starrem Material vorsieht, auf dem man zuvor das Bearbeitungswerkzeug (2) befestigt, und dann den genannten zweiten Block (160) auf der fünften Fläche (152) des genannten ersten Blocks (150) befestigt.

14. Verfahren nach einem der Ansprüche 1 bis 13, **dadurch gekennzeichnet, dass** zur Vorgabe des ersten Wertes (90) der Amplitude (A) der äußeren Kraft (10), mit der das Bearbeitungswerkzeug (2) beaufschlagt wird, das Verfahren mindestens einen vorbereitenden Schritt umfasst, in dem man den maximalen Wert der Amplitudenschwankung (A) dieser äußeren Kraft (10) während mindestens einem der folgenden Arbeitsschritte speichert:
- dem zweiten Arbeitsschritt (5), bei dem das Bearbeitungswerkzeug (2) das Werkstück (8) berührt und auf Ersteres eine Wirkung ausgeübt wird, deren Amplitude (A) von einem minimalen Wert auf einen maximalen Wert ansteigt, der als erster vorgegebener Wert (90) bezeichnet wird, und
. einem vierten Arbeitsschritt (7), bei dem das Bearbeitungswerkzeug (2) den Bearbeitungsgang des Werkstücks (8) beendet und eine Wirkung auf Ersteres ausgeübt wird, deren Amplitude (A) von einem maximalen, als erster vorgegebener Wert (90) bezeichneten Wert auf einen minimalen Wert sinkt.

15. Mittel zur Ausführung eines Verfahrens nach einem der Ansprüche 1 bis 14, die Folgendes umfassen:
- eine zweite Funktionsbaugruppe (300), die es während des laufenden Bearbeitungsvorgangs (3) gestattet,
• die Schwankungen (9) der Amplitude (A) einer äußeren Kraft (10) zu überwachen, mit der dieses Bearbeitungswerkzeug (2) beaufschlagt wird, und
• nach dem Auftreten einer Amplitudenschwankung (A) mit einem Wert zu suchen, der mindestens dem ersten vorgegebenen Wert (90) entspricht, und
• mindestens die Amplitudenschwankung (A), mit einem Wert zu erkennen, der mindestens dem ersten vorgegebenen Wert (90) der Amplitude (A) einer äußeren Kraft (10) entspricht, mit der das Bearbeitungswerkzeug (2) beaufschlagt wird,
- eine dritte Funktionsbaugruppe (400), die es gestattet,
a) wenn ein solche Amplitudenschwankung (A) mit einem Wert erkannt wird, der mindestens dem ersten vorgegebenen Wert (90) entspricht, zu überprüfen, ob es entsprechend dem Arbeitsschritt des Bearbeitungsvorgangs, in dem sich das Bearbeitungswerkzeug (2) befindet, möglich ist, dass eine solche Amplitudenschwankung (A), mit einem Wert, der mindestens dem ersten vorgegebenen Wert (90) der Amplitude (A) einer äußeren Kraft (10) entspricht, mit der dieses Bearbeitungswerkzeug (2) beaufschlagt wird, auftreten kann, und man
- im Fall einer positiven Antwort daraus schließt, dass sich das Bearbeitungswerkzeug (2) in betriebsbereitem Zustand befindet,
- im Fall einer negativen Antwort daraus schließt, dass das Bearbeitungswerkzeug (2) unbrauchbar ist,
b) falls eine solche Amplitudenschwankung (A) mit einem Wert, der mindestens dem ersten vorgegebenen Wert (90) entspricht, nicht erkannt wird, zu überprüfen, ob es entsprechend dem Arbeitsschritt des Bearbeitungsvorgangs, in dem sich das Bearbeitungswerkzeug (2) befindet, möglich ist, dass eine solche Amplitudenschwankung (A), mit einem Wert, der mindestens dem ersten vorgegebenen Wert (90) der Amplitude (A) einer äußeren Kraft (10) entspricht, mit der dieses Bearbeitungswerkzeug (2) beaufschlagt wird, nicht auftreten kann, und man
- im Fall einer positiven Antwort daraus schließt, dass sich das Bearbeitungswerkzeug (2) in betriebsbereitem Zustand befindet,
- im Fall einer negativen Antwort daraus schließt, dass das Bearbeitungswerkzeug (2) unbrauchbar ist,
wobei diese Mittel, **dadurch gekennzeichnet sind, dass** die zweite Funktionsbaugruppe (300) mindestens ein als sogenanntes Erkennungsorgan (17) bezeichnetes Organ aufweist, das es gestattet,
. einerseits mindestens eine Amplitudenschwankung (A), mit einem Wert aufzunehmen, der mindestens dem ersten vorgegebenen Wert (90) der Amplitude (A) einer äußeren Kraft (10) entspricht, mit der das Bearbeitungswerkzeug (2) beaufschlagt wird, und
. andererseits ein elektrisches Signal (11) zu erzeugen, welches das Vorhandensein dieser Amplitudenschwankung (A) mit einem Wert meldet, der mindestens dem ersten vorgegebenen Wert (90) entspricht.

16. Mittel nach Anspruch 15, **dadurch gekennzeichnet, dass** die zweite Funktionsbaugruppe (300) mindestens ein als sogenanntes Erkennungsorgan (17) bezeichnetes Organ aufweist, das es gestattet:
. einerseits mindestens eine Amplitudenschwankung (A), mit einem Wert aufzunehmen, der mindestens dem zweiten vorgegebenen Wert (91) der Amplitude (A) einer äußeren Kraft entspricht, mit der das Bearbeitungswerkzeug beaufschlagt wird, wobei dieser zweite Wert (91) kleiner als der genannte erste Wert (90) ist, und
. andererseits ein elektrisches Signal (11) zu erzeugen, welches das Vorhandensein dieser Amplitudenschwankung (A) mit einem Wert meldet, der mindestens dem zweiten vorgegebenen Wert (91) entspricht,

17. Mittel nach Anspruch 15, **dadurch gekennzeichnet, dass** die dritte Funktionsbaugruppe (400) vom Typ ist, der es gestattet, das Vorhandensein oder das Ausbleiben der Amplitudenschwankung (A) mit einem Wert auszuwerten, der mindestens dem zweiten vorgegebenen Wert (91) entspricht, um, wenn ein solcher zweiter Wert (91) der Amplitudenschwankung (A) der äußeren Kraft (10) erkannt wird, festzustellen, dass das Bearbeitungswerkzeug (2) aufgrund von Verschleiß unbrauchbar ist.

18. Mittel nach einem der Ansprüche 15 bis 17, **dadurch gekennzeichnet, dass** die dritte Funktionsbaugruppe (400) Funktionsbauteile aufweist, die es, wenn das Bearbeitungswerkzeug (2) zur Ausführung identischer, aufeinander folgender Bearbeitungen benutzt wird, gestatten, im Verlauf einer ersten vorgegebenen Anzahl (N1) dieser identischen, aufeinander folgenden Bearbeitungen:
- die aufeinander folgenden, maximalen Werte (VM) der Amplitudenschwankungen (A) einer äußeren Kraft (10), mit der das Bearbeitungswerkzeug (2) beaufschlagt wird, zu speichern,
- ein gewichtetes Mittel dieser aufeinander folgenden, maximalen Werte (VM) zu berechnen,
- zu ermitteln, ob dieses gewichtete Mittel eine merkliche Entwicklungstendenz zu einem Anstieg aufweist, und im Fall einer positiven Antwort zu ermitteln, ob der Anstieg der Entwicklung des Mittelwertes einen vorgegebenen Grenzwert überschreitet, und, wenn ja, daraus zu schließen, dass das Bearbeitungswerkzeug (2) verschlissen ist.

19. Mittel nach einem der Ansprüche 15 bis 18, **dadurch gekennzeichnet, dass** die dritte Funktionsbaugruppe (400) Funktionsbauteile aufweist, die es, wenn das Bearbeitungswerkzeug (2) zur Ausführung identischer, aufeinander folgender Bearbeitungen benutzt wird, gestatten, im Verlauf einer zweiten vorgegebenen Anzahl (N2) dieser identischen, aufeinander folgenden Bearbeitungen:
- die Dauer des vom Bearbeitungswerkzeug (2) mit einer vorgegebenen Geschwindigkeit zurückgelegten Wegs zwischen
. einem ersten vorgegebenen Punkt der Bahn des Bearbeitungswerkzeugs (2) während des ersten Arbeitschrittes (4) und
. einem zweiten Punkt der Bahn dieses Bearbeitungswerkzeugs (2) während des zweiten Arbeitschrittes (2) zu messen, wobei dieser zweite Punkt erreicht ist, wenn erkannt wird, dass das Bearbeitungswerkzeug (2) das Werkstück (8) berührt, und
- die verschiedenen gemessenen Werte der Dauer zu speichern und diese Werte der Dauer mit mindestens einem vorgegebenen Referenzwert (DR) zu vergleichen, um entsprechend der Verfahrgeschwindigkeit des Bearbeitungswerkzeugs (2) zwischen dem ersten Punkt und dem zweiten Punkt einen Wert der thermischen Drift des zweiten Punktes zum ersten Punkt zu ermitteln,
- den ermittelten Wert der thermischen Drift auszuwerten, um die Positionierung des Bearbeitungswerkzeugs (2) zum Werkstück (8) zu korrigieren.

20. Mittel nach einem der Ansprüche 15 bis 17, **dadurch gekennzeichnet, dass** sie aus Folgendem bestehen:
- einer zweiten Funktionsbaugruppe (300), die es gestattet. bei laufendem Bearbeitungsvorgang (3) mindestens alle Amplitudenschwankungen A mit einem Wert zu erkennen, der mindestens dem ersten vorgegebenen Wert (90) der Amplitudenschwankung (A) einer äußeren Kraft (10) entspricht, mit der das Bearbeitungswerkzeug (2) beaufschlagt wird, mindestens ein elektrisches Signal (11) zu erzeugen, welches das Vorhandensein oder das Ausbleiben dieser Amplitudenschwankung (A) mit einem Wert meldet, der mindestens dem ersten vorgegebenen Wert (90) entspricht,
- einer dritten Funktionsbaugruppe (400), die es gestattet, einerseits eine der elektrischen Angaben (40, 50, 60, 70) auszuwerten, welche einen der Arbeitsschritte (4 bis 7) des Bearbeitungsvorgangs (3) kennzeichnen, um zu erkennen, welcher der Arbeitsschritte (4 bis 7) des Bearbeitungsvorgangs begonnen hat, und andererseits das elektrische Signal (11) auszuwerten, welches das Vorhandensein oder das Ausbleiben der Amplitudenschwankung (A) mit einem Wert meldet, der mindestens dem ersten vorgegebenen Wert (90) entspricht, um die vier folgenden Situationen zu berücksichtigen und für jede dieser Situationen Informationen über den Zustand des Bearbeitungswerkzeugs (2) zu erstellen, das heißt,
a) für die Situation des ersten Schrittes (4),
. bei Ausbleiben eines Signals (11), welches eine Amplitudenschwankung (A) mit einem Wert meldet, der mindestens dem ersten vorgegebenen Wert (90) der äußeren Kraft (10) entspricht, Erstellen einer ersten Information (12), die den Zustand des möglichen Betriebs für das Bearbeitungswerkzeug (2) angibt,
. bei Vorhandensein eines Signals (11), welches eine Amplitudenschwankung (A) mit einem Wert meldet, der mindestens dem ersten vorgegebenen Wert (90) der äußeren Kraft (10) entspricht, Erstellen einer zweiten Information (13), die eine mögliche Kollision mit dem Bearbeitungswerkzeug (2) angibt,
b) für die Situation des zweiten Schrittes (5),
. bei Ausbleiben eines Signals (11), welches eine Amplitudenschwankung (A) mit einem Wert meldet, der mindestens dem ersten vorgegebenen Wert (90) der äußeren Kraft (10) entspricht, Erstellen einer dritten Information (14), die angibt, dass das Bearbeitungswerkzeug (2) unbrauchbar ist,
. bei Vorhandensein eines Signals (11), welches eine Amplitudenschwankung (A) mit einem Wert meldet, der mindestens dem ersten vorgegebenen Wert (90) der äußeren Kraft (10) entspricht, Erstellen einer vierten Information (15), welche die laufende Ausführung eines Bearbeitungsgangs angibt,
c) für die Situation des dritten Schrittes (6),
. bei Ausbleiben eines Signals (11), welches eine Amplitudenschwankung (A) mit einem Wert meldet, der mindestens dem ersten vorgegebenen Wert (90) der äußeren Kraft (10) entspricht, Erstellen einer vierten Information (15), welche die laufende Ausführung eines Bearbeitungsgangs angibt,
. bei Vorhandensein eines Signals, welches die Amplitudenschwankung (A) mit einem vorgegebenen Wert einer äußeren Kraft meldet, Erstellen einer dritten Information (14), die angibt, dass das Bearbeitungswerkzeug (2) unbrauchbar ist,
d) für die Situation des vierten Schrittes (7),
. bei Ausbleiben eines Signals (11), welches eine Amplitudenschwankung (A) mit einem Wert meldet, der mindestens dem ersten vorgegebenen Wert (90) der äußeren Kraft (10) entspricht, Erstellen einer dritten Information (14), die angibt, dass das Bearbeitungswerkzeug (2) unbrauchbar ist,
. bei Vorhandensein eines Signals (11), welches eine Amplitudenschwankung (A) mit einem Wert meldet, der mindestens dem ersten vorgegebenen Wert (90) der äußeren Kraft (10) entspricht, Erstellen einer fünften Information (16), die angibt, dass das Bearbeitungswerkzeug (2) einen Bearbeitungsgang abschließt.

21. Mittel nach einem der Ansprüche 15 bis 20, **dadurch gekennzeichnet, dass** eine zweite Funktionsbaugruppe (300) mindestens ein Erkennungsorgan (17) von einem Typ aufweist:
- der zwei sich gegenüberliegende parallele Flächen aufweist, darunter eine erste Fläche (18) und eine zweite Fläche (19), und
- der ein elektrisches Signal (11) ausgibt, wenn er zwischen diesen beiden, sich gegenüberliegenden, als erste Fläche (18) und als zweite Fläche (19) bezeichneten Flächen, in eine als erste Verformungsrichtung (20) bezeichnete, bevorzugte Richtung zusammengedrückt wird, und dies durch die als erste (21) und zweite (22) bezeichneten entgegengesetzten Einwirkungen (21, 22), mit denen jeweils eine der sich gegenüberliegenden Flächen (18, 19) senkrecht beaufschlagt wird.

22. Mittel nach einem der Ansprüche 15 bis 21, **dadurch gekennzeichnet, dass** eine dritte Funktionsbaugruppe (400) eine erste Funktionsstufe (500) aufweist, die es gestattet, das vom Erkennungsorgan (17) erzeugte, elektrische Signal (11) aufzunehmen, und wenn die Stärke der ersten Einwirkung (21) und die Stärke der zweiten Einwirkung (22) in Abhängigkeit von
. einerseits der Stärke der äußeren Kraft (10) schwankt, mit der das Bearbeitungswerkzeug (2) beaufschlagt wird, und
. andererseits (nicht dargestellten) das Bearbeitungswerkzeug (2) nicht betreffenden Schwingungsphänomenen schwankt,
- dieses elektrische Signal (11) so zu filtern, dass vom restlichen Signal ein Teil dieses elektrischen Signals (11) getrennt wird, der eine Amplitudenschwankung (A) der als sogenannte erste und zweite Einwirkung bezeichneten, entgegengesetzten Einwirkungen (21, 22) mit einem Wert meldet, der mindestens dem ersten vorgegebenen Wert (90) entspricht.

23. Mittel nach einem der Ansprüche 15 bis 22, **dadurch gekennzeichnet, dass** eine dritte Funktionsbaugruppe (400) eine zweite Funktionsstufe (600) aufweist, die es gestattet:
- mehrere, von mehreren Erkennungsorganen (17) erzeugte, elektrische Signale (11) aufzunehmen und
- in jedem elektrischen Signal (11) nach einem Teil (23) dieses elektrischen Signals (11) zu suchen, der eine Amplitudenschwankung (A) der als sogenannte erste und zweite Einwirkung bezeichneten entgegengesetzten Einwirkungen, mit denen jedes Erkennungsorgan (17) belastet wird, mit einem Wert meldet, der mindestens dem ersten vorgegebenen Wert (90) entspricht und
- mindestens einige der unterschiedlichen Teile (23) dieser elektrischen Signale zu vergleichen, die jeweils eine Amplitudenschwankung (A) der als sogenannte erste und zweite Einwirkung bezeichneten, entgegengesetzten Einwirkungen mit einem Wert melden, der mindestens dem ersten vorgegebenen Wert (90) entspricht, um das tatsächliche Vorhandensein einer Amplitudenschwankung (A) mit einem Wert zu melden, der mindestens dem ersten vorgegebenen Wert (90)der Amplitude (A) einer äußeren Kraft (10) am Bearbeitungswerkzeug (2) entspricht.

24. Mittel nach einem der Ansprüche 15 bis 23, **dadurch gekennzeichnet, dass** die zweite Funktionsbaugruppe (300) mindestens zwei Erkennungsorgane (17) aufweist, die mindestens an zwei von drei nicht auf einer Linie liegenden Punkten angeordnet sind, die eine Auflagefläche zwischen dem Bearbeitungswerkzeug (2) und der Werkzeugmaschine (1) begrenzen.

25. Mittel nach einem der Ansprüche 15 bis 24, **dadurch gekennzeichnet, dass** die zweite Funktionsbaugruppe (300) Folgendes aufweist:
- mindestens ein Erkennungsorgan (17) von einem Typ:
. der zwei sich gegenüberliegende parallele Flächen aufweist, darunter eine erste Fläche (18) und eine zweite Fläche (19), und
- der ein elektrisches Signal (11) ausgibt, wenn er zwischen diesen beiden, sich gegenüberliegenden Flächen (18, 19), in eine als erste Verformungsrichtung (20) bezeichnete, bevorzugte Richtung zusammengedrückt wird, und dies durch die als erste (21) und zweite (22) bezeichneten, entgegengesetzten Einwirkungen (21, 22), mit denen jeweils eine der sich gegenüberliegenden Flächen (18, 19) senkrecht beaufschlagt wird,
- mindestens einen Bereich (24), der
, zwei, als erste Fläche (25) und als zweite Fläche (26) bezeichnete, sich gegenüberliegende parallele Flächen (25, 26) aufweist, unter Druck in eine als zweite Verformungsrichtung (27) bezeichnete, bevorzugte Richtung elastisch verformbar ist, im Wesentlichen senkrecht zur genannten ersten Fläche (25) und zweiten Fläche (26) ist,
. so zwischen dem Bearbeitungswerkzeug (2) und dem Aufnahmeteil (100) der Werkzeugmaschine (1) angeordnet ist, dass er mit Druck belastet wird, wenn das Bearbeitungswerkzeug (2) mit einer äußeren Kraft (10) beaufschlagt wird,
- das Erkennungsorgan (17) gegen seine erste Fläche (25) mit der ersten Verformungsrichtung (20) parallel zur zweiten Verformungsrichtung (27) des unter Druck elastisch verformbaren Bereiches (24) ausgerichtet, trägt,
wobei das genannte Erkennungsorgan (17) mittels eines Spannorgans (29) auf den unter Druck elastisch verformbaren Bereiches (24) aufspannt ist, und dies
.. derart, dass es mit einer Druckspannung eines vorgegebenen Wertes belastet wird,
.. so dass der Druck des unter Druck elastisch verformbaren Bereiches (24) unter Einwirkung einer äußeren Kraft (10), mit der das Bearbeitungswerkzeug (2) beaufschlagt wird, den Wert der Druckspannung, mit dem das Erkennungsorgan (17) belastet wird, proportional verringert und folglich das vom genannten Erkennungsorgan (17) erzeugte elektrische Signal (11) proportional verändert.

26. Mittel nach einem der Ansprüche 15 bis 25, **dadurch gekennzeichnet, dass** die dritte Funktionsbaugruppe (400) Funktionsbauteile aufweist, um den ersten Wert (90) der Amplitude (A) der äußeren Kraft (10) vorzugeben, mit denen das Bearbeitungswerkzeug (2) beaufschlagt wird, und dies in mindestens einem vorbereitenden Schritt, wobei diese Funktionsbauteile es gestatten, den maximalen Wert der Amplitudenschwankung (A) dieser äußeren Kraft (10) während mindestens einem der folgenden Arbeitsschritte zu speichern:
- dem zweiten Arbeitsschritt (5), bei dem das Bearbeitungswerkzeug (2) das Werkstück (8) berührt und eine Wirkung auf Ersteres ausgeübt wird, deren Amplitude (A) von einem minimalen Wert auf einen maximalen Wert ansteigt, der als erster vorgegebener Wert (90) bezeichnet wird, und
. einem vierten Arbeitsschritt (7), bei dem das Bearbeitungswerkzeug (2) den Bearbeitungsgang des Werkstücks (8) beendet und eine Wirkung auf Ersteres ausgeübt wird, deren Amplitude (A) von einem maximalen, als erster vorgegebener Wert (90) bezeichneten Wert auf einen minimalen Wert sinkt.

27. Werkzeugmaschine, die eine Mehrzahl von Antriebsmitteln mit Inkrementalbetrieb aufweist, wobei diese Antriebsmittel mehrere bewegliche Organe betätigen, so dass ein Bearbeitungsgang an einem Werkstückrohling ausgeführt wird, der auf einem Werkstückhalter dieser Werkzeugmaschine befestigt ist, wobei die genannte Werkzeugmaschine mit einem Steuerungsprogramm arbeitet, das in einer Schritttabelle gespeicherte digitale Daten benutzt, um jedem Antriebsmittel eine Reihe von inkrementalen Verfahrbefehlen zuzuweisen, die entsprechend einer zeitabhängigen Variablen aufeinander folgen, und die Befehlsfolge in der Schritttabelle enthalten ist, wobei die genannte Schritttabelle
- ausgehend von Ergebnissen einer Berechnung erstellt wird, welche die optimale Bearbeitungsbahn zeitabhängig festlegt, und
- es gestattet, ein bestimmtes Profil mit einem bestimmten Material unter Berücksichtigung der Merkmale der Werkzeugmaschine zu erhalten, wobei diese Werkzeugmaschine **dadurch gekennzeichnet ist, dass** sie Funktionsmittel der Ansprüche 15 bis 26 aufweist, um das Verfahren nach einem der Ansprüche 1 bis 14 durchzuführen.
